# EUROPEAN PATENT SPECIFICATION

(11) **EP 3 207 758 B1**
(45) Date of publication and mention of the grant of the patent: **01.04.2020**
(21) Application number: 15780837.9
(22) Date of filing: 13.10.2015
(51) Int. Cl.: H04W 16/26, H04W 12/00, H04W 24/02, H04W 52/04, H04W 64/00, H04W 76/12, H04W 84/04, H04W 88/04, H04W 16/32, H04W 36/00, H04W 36/04, H04W 48/20, H04W 88/16

(54) **SELECTING THE QCI OF A CONNECTION OF AN AGGREGATOR DEVICE**
AUSWAHL DER QCI EINER VERBINDUNG EINER AGGREGATORVORRICHTUNG
SÉLECTION DU QCI DE CONNEXION DE DISPOSITIF AGRÉGATEUR

(30) Priority: 13.10.2014 EP 14382390; 05.12.2014 EP 14382497; 05.12.2014 EP 14382499; 26.12.2014 EP 14382571; 26.12.2014 EP 14382572; 02.02.2015 EP 15382031; 02.02.2015 EP 15382033; 19.06.2015 EP 15382323; 30.07.2015 EP 15382402; 30.07.2015 EP 15382399; 30.07.2015 EP 15382400; 18.09.2015 EP 15382455; 18.09.2015 EP 15382454
(43) Date of publication of application: 23.08.2017
(73) Proprietor: Vodafone IP Licensing Limited, The Connection Newbury Berkshire RG14 2FN (GB)
(72) Inventor: DE PASQUALE, Andrea, London W26BY (GB); MURRAY, Eric, London W26BY (GB); OLIVER, Antonio, London W26BY (GB)
(74) Representative: Boult Wade Tennant LLP
(86) International application number: PCT/EP2015/073698
(87) International publication number: WO 2016/059063

(56) References cited:
- EP-A1- 2 442 605
- WO-A1-2008/107625
- WO-A2-2010/151047
- US-A1- 2011 235 514
- US-A1- 2012 281 685

## Description

### Field of the Disclosure

This disclosure relates to a telecommunication system. In particular the disclosure relates to a telecommunication system that provides wireless wide area communications in cellular telecommunications networks and uses user equipment (UE) to provide an aggregation service in addition to wireless wide area communications provided by a macrolayer cellular telecommunications infrastructure.

### Background to the Invention

Cellular telecommunications networks characteristically provide "cells" of radio communication coverage between communication devices (which are typically mobile) and a core network (with a "downlink" from core network to communication device and an "uplink" in the opposite direction).

Various radio access technologies (RATs) are implemented: currently *digital* cellular networks are the most common and these are loosely classed as second generation (2G), third generation (3G), fourth generation (4G), etc. technologies according to whether the RAT achieves effective data communications that meet increasingly challenging requirements. In meeting these requirements, the technologies make different uses of the available radio frequency (RF) bandwidth: neighbouring cells in 2G technologies, for example, are deployed so that they use RF bandwidth at different frequencies to avoid interference.

To ensure effective coverage of a large geographic area, a plurality of cells are provided by respective network nodes referred to variously as base transceiver stations and base stations. Base (transceiver) stations are associated with one or more antenna arrays which in turn establish respective cells. They are controlled at least in part by other entities in the core network known as controllers (in 3G technologies such as UMTS these are referred to as radio network controllers, RNCs). More recently certain categories of base transceiver stations, referred to as eNodeBs or eNBs in the context of LTE, implement both base station functionality and at least some controller functionality. The antenna arrays (and thus, often, the base stations) are geographically distributed so that the coverage of each cell typically overlaps with that of neighbouring cells only at the cell edge. The RATs aim to ensure that communication devices are provided with continuous coverage even if they are moving from the coverage of a first cell to that of a second across the cell edge region: to do this they use a reselection technique referred to as "handover" (or "handoff"). Handoff is described as "soft" when the procedure allows for a transition period during which control and/or user data traffic intended for a given communication device is routed to the device through more than one of the cells, in other words the device is permitted to "camp" on more than one cell.

Providing communication devices with coverage at cell edge typically requires more network resources; for instance transmission power needs to be higher in the downlink in order for the RF signal to propagate to the cell edge.

Release '99 of the W-CDMA Standard enabled the reuse of the same frequency at cell edge with soft handover (i.e. handover having a transition phase where a terminal effectively camps on both source and target cells).

In later releases of 3G RATs, however, HSDPA, for instance, has mainly removed in downlink the concept of soft handover: data is transmitted from only one cell to the terminal.

In many parts of the world, 4G RATs (such those compliant with the 3GPP standards known as Long Term Evolution (LTE)) are deployed. Like these later 3G releases, LTE uses universal frequency reuse (where cells sufficiently far apart operate on the same frequency) without soft handoff. Consequently, high levels of interference and low SINR (signal to interference plus noise ratio) can be expected near the cell edge. This means users at the cell edge in LTE (and HSDPA, etc.) require more radio resources (i.e. user plane resource blocks, control channel resource blocks, etc.) than users closer to the serving base transceiver stations (i.e. eNBs). Accordingly, the potential for the cell be impacted increases when there is an increase in the number and activity of users at/near to the cell edge.

LTE is also specified to handle different types of base transceiver station entities. The requirement for cellular communications coverage is far from uniform across a typical geographic area. Furthermore natural features or features of the built environment introduce additional constraints upon the operation of base station entities.

The most prevalent class of base transceiver station is the wide area eNodeB which provides coverage over a wide geographical spread (spanning distances of up to 20km) - this is sometimes termed the "macro (layer) eNB" type. Such eNBs often provide more than one "cell" or sector.

Base transceiver stations of more limited transmit power than the macro eNBs, and typically providing one cell or sector, are referred to as micro eNBs.

Smaller cells may be provided by devices of even lower power: local area eNBs (or picocell base stations) and home eNBs (or femtocell base stations). The resulting femtocells and picocells are sometimes referred to generally as "small cells". These classes of base transceiver stations are typically used in areas where coverage would otherwise be inadequate or awkward to maintain using conventional eNB equipment. The main distinction between local area and home eNBs is that in the case of the home eNBs the location and control of the device lies with the end-user rather than the network operator; these devices conventionally offer communication services to a "white-list" of home-users rather than any network subscribers that happen to be within coverage.

LTE has a hierarchical architecture so that a wide area layer of coverage (the macro layer) may overlap or encompass geographic regions within the coverage of smaller cells (the "micro layer"). Nevertheless there may be a preference on behalf of the network operator to have uplink and/or downlink traffic for certain devices handed down to the micro layer; to free up capacity in the macro layer for devices that are out of micro layer coverage, for example.

Network operators wish to improve the efficiency of the use of their networks at or near cell edges.

It is known to address the cell edge problem by:
- Increasing the performance at cell edge, for instance by adding more and more complex software in the macrocells to improve the cell edge performance (usually within the area of the coordinated scheduling between adjacent cells). In certain cases, such as for the CoMP (Coordinated Multi Point) feature described in 3GPP Release 11, the improved cell edge performance brings with it the need for dedicated transmit (Tx) and receive (Rx) antennas associated with one or more macro eNBs.
- Installing fixed Small Cells (i.e. local area eNodeBs) to increase system capacity.

The installation of fixed small cells by a network operator brings with it the burden of finding suitable locations, paying for the site rental, and deploying additional cables to connect the fixed Small Cells to other nodes of the network. Furthermore, installation and commissioning (including configuring) of fixed small cells takes time: even if wireless backhaul is used instead of cables, the fixed small cells need to be installed in a suitable position and configured for operation at that location. In some cases, this process may include the configuration and testing of directional antennas associated with such small cell devices which require the skills of a professional radio engineer. In addition, where the small cell device fails or otherwise requires servicing the device and the installation site needs to be accessible by the operator: since these devices are typically the property of the network operator but located on private land and in sometimes inaccessible locations, there are likely to be logistical and practical obstacles to intervention by one of the operator's engineers.

The LTE standards (Release 10 (and later) of the 3GPP) also describe two further Radio Access Network entities: relays and repeaters which can be used to address the problem of cell edges. Both types of entity provide extension of coverage for one cell of an existing base transceiver station.

A repeater is communicatively tied to a corresponding (typically macro) eNB, having a first antenna within a given cell (the "donor cell") of the eNB and a second antenna directed towards a coverage area where coverage extension is required. In certain instances, a repeater merely retransmits (i.e. re-broadcasts) a signal, received at a first frequency, at a second frequency, typically amplifying the repeated signal. Uplink and downlink signals may thus be conveyed through repeaters without any need for decoding.

Repeaters specified in Release 10 (and later) of the 3GPP standards decode the (incoming) signal and then recode and retransmit that signal: this new class of repeater is referred to as a "relay".

A relay is also communicatively tied to a corresponding eNB. It too has a first antenna within a given cell (the "donor cell") of the eNB and a second antenna directed towards a target coverage area. Relays however form their own cells and operate in many ways as base transceiver stations in their own right. Relays decode the signals from the donor cell, applying any necessary error correction, and make decisions about how radio resources (such as the channels within each radio subframe) are assigned.

There are certain network conditions where individual communication devices in cellular networks have a disproportionately detrimental effect on the network performance.

In certain cases, for example, one or more terminals (also termed "user equipment" or simply UE) may be close to the edge of a serving cell. A small number of active users at cell edge can consume a high number of cell resources (e.g. LTE resource blocks) since cell edge typically correlates to poor coverage; implying that a higher number of resources must be dedicated to the cell edge users to provide a throughput at a given level when compared to the demand for resources by users that are in better radio conditions (i.e. away from the cell edges). Serving radio resources to communication devices at cell-edge has a higher cost in terms of resource allocation and power usage than a similar device in a region of the cell closer to a serving base transceiver station system (such as an eNodeB).

When cellular networks are deployed, they are often specified with greater capacity than is forecast to be required by the existing communication devices. However, the numbers of communication devices and the demand for ever more network resources means that the network may be affected by capacity problems in the radio interface more often than is acceptable.

Known approaches to cell edge problems seek to increase the capacity or coverage of the cellular network by addition of further network equipment at locations in the network where cell edge problems regularly occur (or are forecast). Such equipment is typically fixed in location and requires careful planning.

Network and other performance conditions very often change over time: for instance, individual communication devices that, by virtue of their location at the cell edge and active use of the network, have a detrimental effect on the network performance at one time, may, at other times, be idle and cause no such effect. Furthermore, as UEs are typically mobile, they may have moved outside the affected cell entirely or closer to the base transceiver station equipment that serves the cell - either way, reducing the detrimental effect.

It is therefore desirable to ensure that the network can adapt to the presence of dynamic effects upon capacity and coverage and in addition to provide a system that allows the extension of coverage in a cellular network that can be deployed dynamically without requiring the siting of additional radio equipment near regions of poor radio coverage.

Furthermore, the level of priority assigned to data from several different communications devices that have a backhaul via small cell base stations and/or relay devices must be balanced with the priority of data in the corresponding macrolayer backhaul.

US 2012/281685 A1 describes handling multiple voice over internet protocol (VoIP) calls via a single bearer.

### Summary of the Invention

According to a first aspect of present disclosure there is provided a first communication device for providing aggregator functionality to one or more second communication devices in a cellular communication network, the first communication device comprising processing circuitry configured to: obtain, for the or each second communication device, quality indication information that indicates a preferred quality of a communication bearer between the second communication device and a core network entity of the cellular communication network, wherein the quality indicator information is a Quality of service Class Identifier, QCI, value; determine aggregate quality indication information based on the respective quality indication information; and request a change in the preferred quality of a relay bearer between the first communication device and the core network entity in accordance with the determined aggregate quality indication information.

Using the above apparatus, quality indication information (e.g. QCI) may be selected for EPS bearers used to carry Relay-UE traffic in a dynamic fashion according to loads placed upon the radio access network.

Optional features of embodiments of the above aspects of the present disclosure are defined in the dependent claims.

According to a second aspect of present disclosure, there is provided a method for setting quality indication information for bearers established by first communication devices providing aggregator functionality to one or more second communication devices in a cellular communication network, the method comprising: obtaining, for the or each second communication device, quality indication information that indicates a preferred quality of a communication bearer between the second communication device and a core network entity of the cellular communication network, wherein the quality indication information is a Quality of service Class Identifier, QCI, value; determining aggregate quality indication information based on the respective quality indication information; and requesting a change in the preferred quality of a relay bearer between the first communication device and the core network entity in accordance with the determined aggregate quality indication information.

According to a third aspect of present disclosure, there is provided a computer software as defined by the appended independent claim 15.

In addition, the above aspects may be implemented within a controller entity for controlling an aggregator facility in a cellular telecommunication network, wherein the network has a core network, CN, and a radio access network, RAN, and serves at least one first communication device, the controller entity comprising a network interface unit configured to provide an interface to the CN and controller unit configured: to obtain performance condition information for a region of the telecommunication network, to determine whether a second communication device provides aggregator functionality to said at least one first communication device, and to instruct the second communication device to establish an aggregation connection to the first communication device in dependence upon the determination.

Various respective aspects and features of the present disclosure are defined in the appended claims.

It is an aim of certain embodiments of the present disclosure to solve, mitigate or obviate, at least partly, at least one of the problems and/or disadvantages associated with the prior art. Certain embodiments aim to provide at least one of the advantages described below.

### Brief Description of the Drawings

Various embodiments of the present disclosure will now be described with reference to the accompanying drawings, in which:
Figures 1A to 1C illustrate a radio access network where certain communication devices are dynamically assigned as aggregators within a single cell;
Figures 2A and 2B illustrate a further radio access network where certain communication devices are dynamically assigned as aggregators within a multicell network;
Figure 3 illustrates the functional elements of an aggregator controller suitable for enabling, controlling and disabling an aggregator layer in the network architecture of Figures 1A, 1B, 1C, 2A and 2B;
Figure 4 illustrates the behaviour of nearby communication devices when the aggregator controller of Figure 3 enables an aggregator layer at a given aggregator;
Figure 5 illustrates the functional elements of a communication device suitable for use in the network architecture of Figures 1A, 1B, 1C, 2A and 2B;
Figures 6A and 6B illustrate certain operations of a controller entity in determining whether activation of an aggregator facility is supported;
Figure 7 shows a flowchart showing certain operations of a communication device associated with mobility status;
Figure 8 shows a flowchart showing certain further operations of a communication device associated with mobility status;
Figure 9 illustrates the use of EPS bearer as a transport layer for connectivity between an aggregator device and the core network;
Figure 10 illustrates a variation upon the arrangement in Figure 9;
Figure 11 illustrates the architecture of a radio access network where certain communication devices are dynamically assigned as aggregators in accordance with an aspect of the present disclosure;
Figure 12 illustrates the operation of a relay equipment to determine the priority of a relay bearer depending upon the priority characteristics of component bearers in accordance with one aspect of the present disclosure;
Figure 13 illustrates the operation of a relay equipment to determine the priority of a relay bearer depending upon the priority characteristics of component bearers in accordance with a further aspect of the present disclosure;
Figure 14 illustrates an alternative scheme for the operation of a relay equipment to determine the priority of a relay bearer depending upon the priority characteristics of component bearers in accordance with yet another aspect of the present disclosure; and
Figure 15 illustrates the operation of a relay equipment to determine the priority of a relay bearer depending upon the priority characteristics of component bearers and macrolayer bearers in accordance with another aspect of the present disclosure.

### Detailed Description of Preferred Embodiments

The present disclosure relates to the integration of an aggregation service with existing wireless wide area communications provided in a telecommunications network architecture that includes a radio access network (RAN), a core network (CN) and a packet data network (PDN). Communication devices, such as mobile terminals, user equipment (UEs) and wireless access stations, establish wireless connections to the network by means of the RAN.

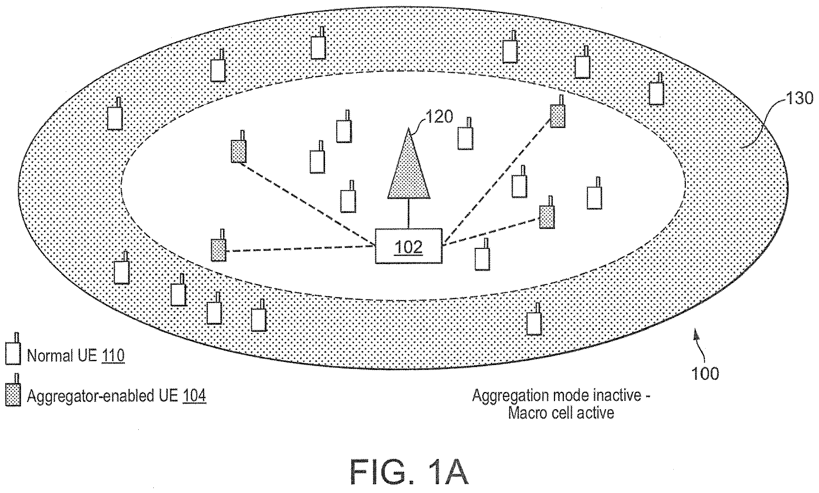

Figures 1A to 1C show a single cell 100 of the telecommunications network provided by a base transceiver station (i.e. macro eNB) 120 within the RAN. The telecommunications network architecture further comprises a network node, referred to as an aggregator controller (AC) 102, which communicates with the RAN and the CN (illustrated here as a link between the AC 102 and the eNB 120) but which may be implemented independently of the component entities of either RAN or CN.

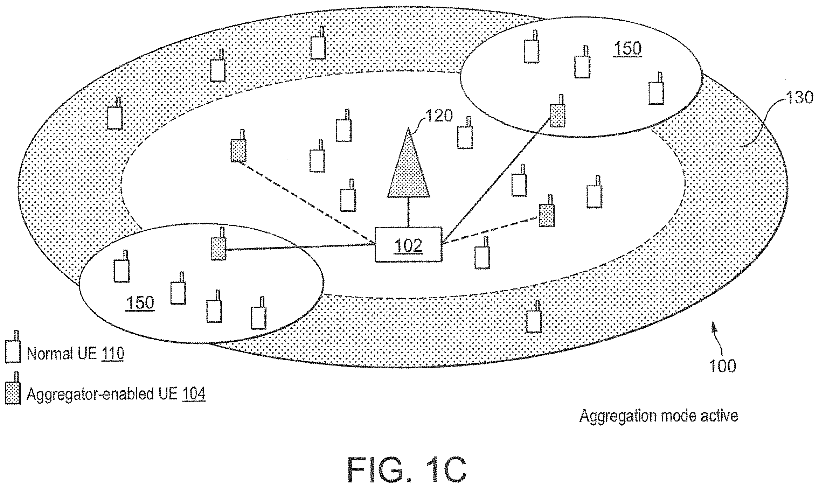

The AC 102 identifies at least one communication device 104 as candidate for assignment as an aggregator. The AC 102 also instructs any given aggregator candidate 104 to activate (or deactivate) an aggregator mode, whereby it provides base station functionality for nearby (mobile) communication devices 110: in Figure 1C, each activated, aggregator-enabled communication device 104 provides a respective aggregator cell 150. The AC 102 also determines whether any aggregator candidate 104 is activated at all at a given time in a given region of the telecommunications network. In Figures 1A to 1C, candidate aggregators 104 are illustrated as UEs: this is merely one example of a suitable communication devices 104, candidate aggregators may equally be dedicated communication devices or even small cell base transceiver stations such as HeNBs or femtocell eNBs.

The AC 102 is configured to interrogate one or more communication devices 104, where these devices are connected to the RAN (i.e. the eNB 120), to determine certain parameters associated with the device 104 and/or its connection to the RAN (e.g. SINR, reference signal received power (RSRP), receive signal code power (RSCP), location information, battery life, etc.). Data associated with the parameters is processed at the AC 102 and, if the parameters are determined to indicate that the or each communication device 104 is a candidate for assignment as an aggregator, the communication device 104 may be configured to implement an aggregator mode, whereby it provides base station functionality for nearby (mobile) communication devices 110.

Figures 1A to 1C also illustrate one scenario where the facility extending base station functionality to nearby (mobile) communication devices 110 is contemplated. As communication devices approach the furthest range of macrocell coverage in the cell (i.e. the cell edge, illustrated as shaded area 130), they consume more network resource. By selecting certain communication devices to act as aggregators, these devices being within good macrocell coverage but having the facility to extend base station functionality within an "aggregator cell" beyond the coverage of the macrocell layer, the network can deploy aggregators to address the problems of cell edge.

Certain network-connected communication devices 104 are thus used as a type of small cell entity. Network-connected communication devices assigned to perform this small cell-like functionality are termed "aggregators" because, where there are more than one communication devices 110 nearby a given network-connected communication device 104 in aggregator mode, the data traffic from the nearby communication devices 110, for each of the nearby communication devices 110, is buffered for transport (i.e. "aggregated") using a backhaul connection between the aggregator 104 and the core network. By aggregating the data from one or more nearby communication devices 110, the aggregator can both (a) assist in extending the network coverage to locations where (i) the macrolayer coverage is otherwise either temporarily or permanently inadequate or (ii) the macrolayer coverage is adequate but devices within a certain coverage area (e.g., cell edge) consume too many resources and (b) transport data over the RAN more efficiently. One of the advantages of buffering data from the nearby communication devices 110 is that the backhaul connection from the aggregator 104 (which may be considered as a single logical "pipe") can be made less "bursty" reducing signal resource consumption and reducing the overhead of the signalling.

Aggregators are typically, dynamically switched-on and off in dependence upon conditions affecting the performance of the network. These performance conditions include both network conditions (such as interference, load, etc.) and other conditions that could affect the performance of the system (such as the predicted level of activity in the cell at a given time or date, the presence and/or number of candidate aggregators in suitable locations, the distribution of UEs in cell edge locations, and/or the level of resource consumption by communication devices in the potential coverage area of respective candidate aggregators).

In certain cases, the coverage of the existing macrolayer is used for backhaul and a technology/band different from the one used for the backhaul is used as a radio interface for extending the coverage to nearby (mobile) communication devices 110. The coverage extension is therefore supplied to nearby communication devices 110 by aggregators operating "out-of-band" with respect to the macrolayer operating frequencies.

In one example, the macrolayer operates using LTE carriers at frequency bands around 800MHz or 1800MHz while the cell 150 provided by the aggregator to nearby communication devices operates at 2600MHz. In another example, the macrolayer operates using LTE carriers at frequency bands around 2600MHz using an FDD technology while the cell extension provided by the aggregator to nearby communication devices operates at 2600MHz in a TDD technology. Furthermore, the reader will appreciate that further out-of-band frequency bands may be available at frequencies for which no licence is needed, such as the 2.4GHz and 5GHz bands used by conventional WiFi technologies (i.e. compliant with the IEEE 802.11 family of standards) or in the near infrared and visible light spectrum used by light communications technologies such as visible light communications, VLC (sometimes referred to as "Li-Fi").

Aggregators (and candidate aggregators) may be fixed in a single location much as conventional small cell base station transceivers are: determining or obtain a location for such devices is essentially a matter of checking that this fixed status has not been altered. Equally and without loss of generalisation, it will be appreciated that in many instances aggregators (and candidate aggregators) are themselves mobile. While in certain embodiments, it is a requirement that the aggregator is static when active, it is also contemplated that the aggregator may be moved to another site and activated at the new site - such communication devices are referred to as "nomadic", as distinct from "fixed" devices. One specific example of a nomadic device arises when the candidate aggregator is installed in a motor vehicle, such as a commuter's car: the vehicle is driven from a home location (where it may be static) to an office location (where, after the journey is complete, the device may again be unmoved throughout the working day).

The AC 102 is a central logical entity (e.g. a server), which may or may not be integrated within the elements of the 3GPP Radio Access Network. The AC 102 monitors conditions affecting the performance of the network to assist in deciding which UEs 104 (or other network-connected communication devices) will act as aggregator.

Certain implementations of the AC 102 obtain information from all network-connected communication devices in a given sector before determining which of these devices can act as aggregators by virtue of the device status and current location. This determination is repeated for respective sectors at intervals of time: in certain cases, the intervals are equal in duration, while in others, the intervals are of variable duration and may be adapted to the known or predicted behaviour of communication devices using the network.

The AC may further repeatedly determine whether, on a set of basic criteria (i.e. performance conditions such as the network conditions, the current location and status of communication devices, etc.), any devices in a given sector should enter into service as aggregators at all. The criteria may include a measure of the comparative benefit of introducing an aggregator facility compared to having no aggregator facility in a given sector.

The AC is capable of establishing, maintaining and deactivating communications with the candidate aggregators, i.e. those UEs or other network-connected communication devices determined to have the capability to act as aggregators. This capability (provided through an application layer carried over the user plane of the macro layer, for example) allows the AC to:
- obtain information from all the UEs that can act as aggregators 104, this information may include performance factors such as location and its accuracy, supported RATs and related technologies (such as conventional WiFi technologies, VLC technologies, etc.), supported operational frequency bands, battery characteristics, status, and current battery drain consumption; and/or
- provide commands to the aggregators 104 such as: commands to set-up an aggregator control layer using some specific algorithm depending upon performance conditions such as those obtained from the aggregators 104, to select the RAT/band to be used in such a layer, to start transmission, to send handover commands to the aggregated UEs (i.e. the nearby communication devices 110 served by the aggregators 104), to stop transmission, and/or to send information to the aggregator control layer.

In certain implementations, the AC 102 might communicate with the LTE eNodeB or 3G RNC in order to "move", via handover to a specific RAT/frequency, a terminal (or other communication device) that is set to act as an aggregator 104. This move may be a change in serving cells: in such cases the communication with the LTE eNodeB or RNC is a request for a handover of the aggregator 104 from a current cell to a neighbouring cell: communication with the eNodeB or RNC is necessary then since handovers are under the control of the LTE eNode (for 3G, the control is done by the RNC). The move might also be a forced reselection: in which case communication with the LTE eNodeB would be unnecessary.

In certain implementations, the AC 102 may establish a further direct communication with "normal" UEs 110 (i.e. those communication devices not currently assigned to act as aggregators). This direct communication may be through a preinstalled application, for instance, configured to gather further performance information such as the strength/quality of received signals in the cell 100 in which the normal UEs 110 are camped/connected, and/or data on the strength/quality of received signals in other RATs/band, and/or location information.

In certain implementations, the aggregation enabled communication devices 104 (i.e. aggregators or candidate devices) are also relay nodes. Such devices may transfer data for one group of network-attached communication devices as a conventional relay node, while serving another group of network-attached communication devices as an aggregator.

The aggregator 104 is distinct from a typical relay node in a number of respects. Firstly, relay nodes are tied to a particular donor cell. They are presumed to be static and entirely under the control of the network operator via the eNB providing the donor cell. Furthermore, relay nodes are typically operated using radio resources allocated to them by the donor cell and are thus integrated in the scheduling for the macrocell. In logical terms, a connection from a communication device to the core network via a relay node is the same logical connection as that between the communication device and the core network via the donor eNB: resource that would be allocated within the macrolayer for the direct connection from communication device to eNodeB is instead allocated to the indirect connection via the relay unit.

The macrolayer (i.e. provided by eNB 120) and the aggregator 104 provide separate logical connections between the Core Network and communication device 110, with the aggregator 104 being "configurable" to provide this connection. Whereas the relay node provides an alternative physical route provided the communication device camps on the relay cell rather than the donor cell, the AC 102 ensures that the network can control whether a given candidate (or group of candidates) for aggregator is enabled (i.e. enters into service as an aggregator) and thus determines the conditions under which the communication device switches between a connection established by the RAN and a connection established by the aggregator (when instantiated).

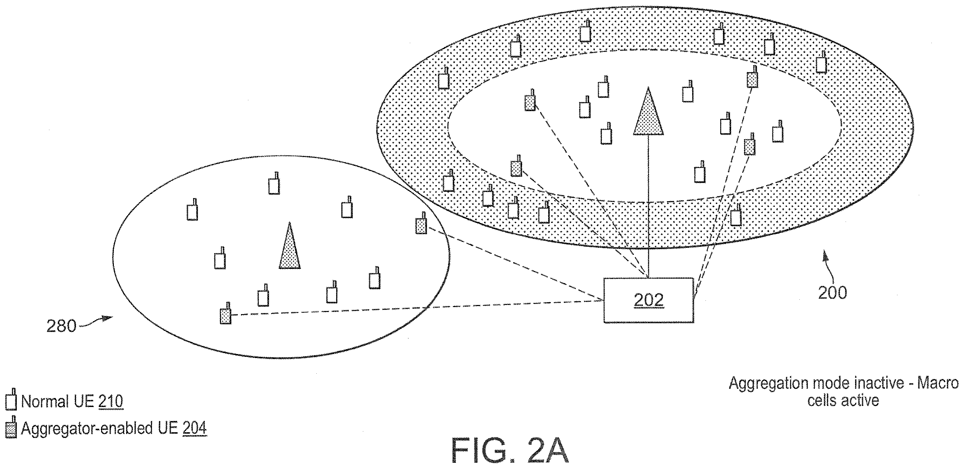

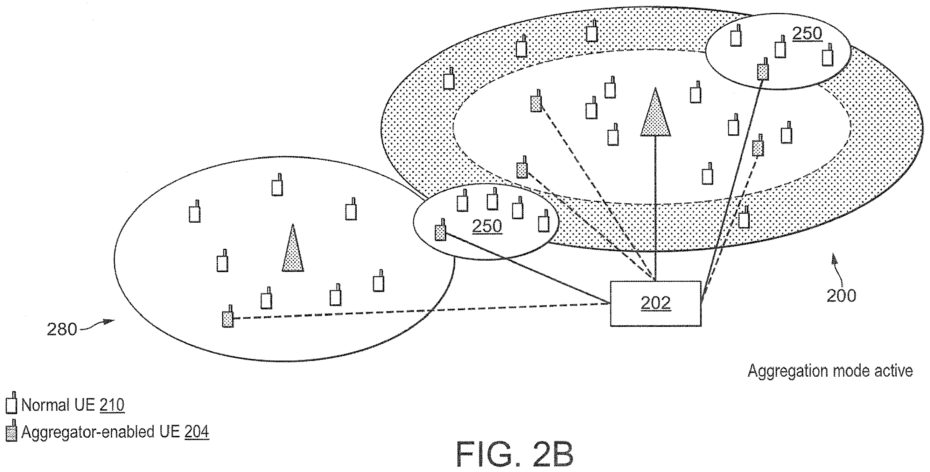

Figures 2A and 2B illustrate a further radio access network where certain communication devices are dynamically assigned as aggregators within a multicell network. This scenario demonstrates that the aggregator is not however merely a "temporary" base transceiver station. As the aggregator is activated and deactivated ad *hoc* (i.e. opportunistically) based on the need of the RAN as a whole, it is contemplated that certain communication devices 204 camped on neighbouring cells 280 could be assigned aggregator status: in Figure 2B, each activated, aggregator-enabled communication device 204 provides a respective aggregator cell 250.

Such aggregators 204 can be arranged to provide more effective base station functionality to communication devices in the cell 200 currently serving a conventional communication device 210. While that aggregator 204 would normally be outside the reach of the serving cell 200, it can nevertheless be activated, via the AC 202.

As the AC 202 need not be associated specifically with a given cell 200, but rather with a network that may include a plurality of cells (200, 280), the AC 202 is adapted to view the network holistically. By activating aggregator facilities 204 that sit outside the (macrolayer) coverage of a cell 200 yet still serving communication devices 210 within that cell 200, the AC 202 may still deliver an overall benefit to the network.

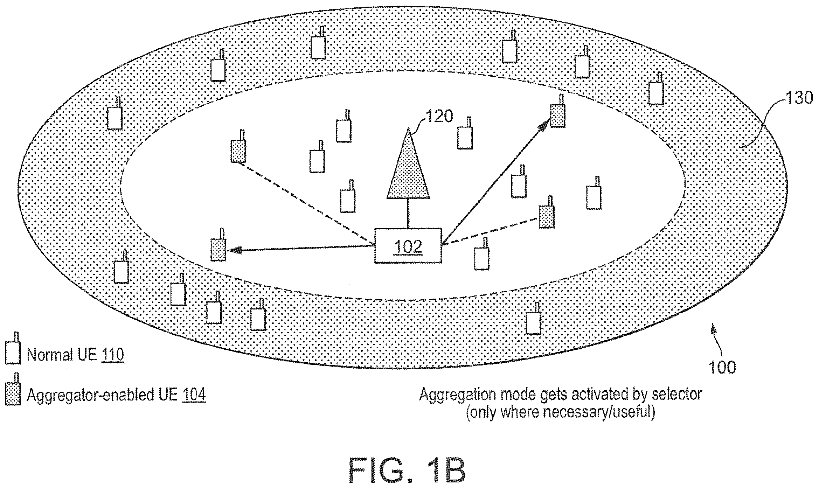

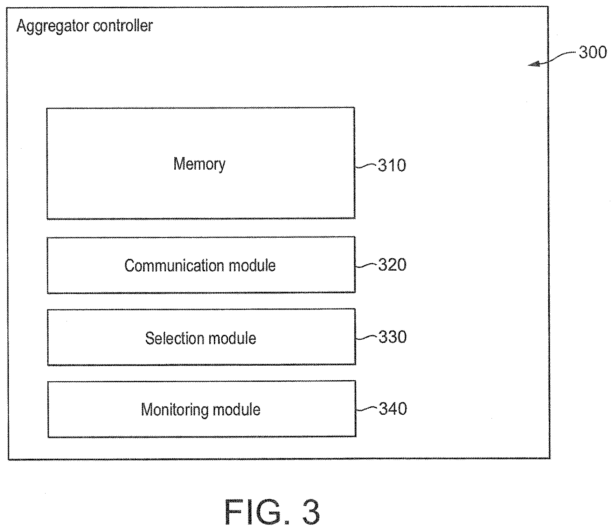

Figure 3 illustrates the functional elements of an aggregator controller 300 suitable for enabling, controlling and disabling an aggregator layer in the network architecture of Figures 1A, 1B, 1C, 2A or 2B. These functional elements may be implemented as software routines and/or as dedicated hardware units, these elements being substantially interchangeable.

The functional elements include a communication module 320 for obtaining information from potential aggregators by establishing communication via an application layer with these devices. The information obtained contributes to the factors affecting the performance of the network upon which the establishment of a connection between aggregators and nearby communication devices depends and may include: current location (e.g. location information derived from global or regional satellite positioning systems, such as Global Positioning System, GPS, GLONASS, BeiDou/COMPASS, IRNSS or Galileo)); historical information (covering, for example, the last two weeks) of the location of the candidate aggregator; level of physical mobility at present (i.e. whether moving or not); a measure of LTE radio coverage in the macrolayer; an indicator of battery level, current consumption, expected remaining battery etc.; information concerning neighbour cells of the aggregator, in respect of the connection between the aggregator and the macrolayer RAN; and a measure of the improvements (or otherwise) expected, after switching on an aggregator layer in a specific region of the radio network, the improvements being measured in terms of latency (i.e. data waiting time), for example. This information may be made available in the application layer through an aggregator client application executing on the respective aggregator candidate devices.

One reason for obtaining such information relates to the nature of the devices that are candidates. It is likely that many of the candidate aggregators are in fact "nomadic", changing (i.e. commuting) between two or more static locations over a period of hours or days. Thus for many candidate devices the characteristics of the network will change as they move within the network: a communication device that is a suitable candidate aggregator at a given location, X, and a given time, T, may not be suitable elsewhere, X + x, at a later instant, T + t: specifically if the location is close enough to extend an aggregator cell to the (macrolayer) cell edge at T, but out of range of the cell edge at T + t. Thus the controller 300 needs to obtain this information to inform decisions as to whether the communication device is (currently) a candidate aggregator and whether, if a candidate aggregator, it should be activated/deactivated as an aggregator.

Optionally, the communication module 320 may be configured to obtain additional information from communication devices other than aggregators; this additional information being analogous to the information obtained from candidate aggregators and similarly contributing to the factors affecting the performance of the network upon which the establishment of a connection between aggregators and nearby communication devices depends. A specific non-aggregator client application may be installed in some or all of the communication devices within a network to provide this additional information.

The communication module 320 may also be configured to obtain macrolayer information (i.e. data concerning network conditions) from the macrolayer concerning the current level of resource consumption of the schedulers, coverage maps and (if available) real time traffic maps.

The functional elements include a selection module 330 for selecting (and communicating to) the aggregators that have to start the transmission of an aggregator cell and for determining which of the supported technology/frequency bands the selected aggregators is to use in operation.

A monitoring module 340 is also provided to evaluate performance conditions (such as the network conditions and other conditions affecting performance) to determine which of the currently selected aggregators will continue their transmission.

In cases where a change in aggregator is indicated by the monitoring module 340, the selection module 330 may be further configured to select (and communicate to) those aggregators which should stop their transmission (and thereby cease to be in service as an aggregator).

When enabling an aggregator layer in a given sector or cell of a radio network, the aggregator controller first instructs one or more communication devices (preselected to act as aggregators) to start radiating coverage (i.e. to implement an aggregator "cell").

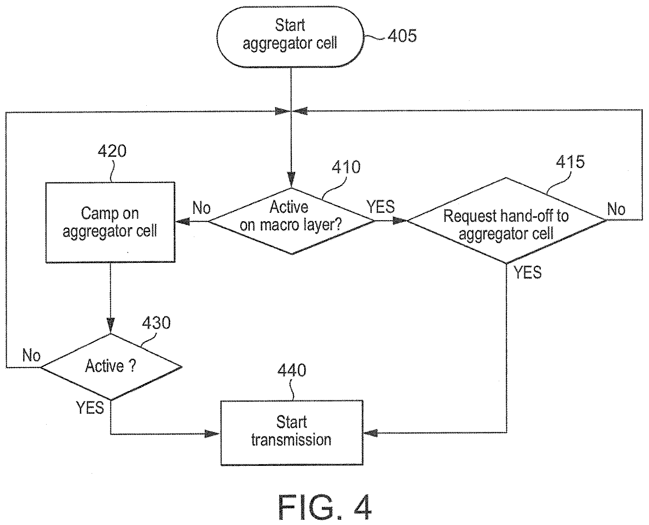

In Figure 4, the activity of communication devices nearby an active aggregator are illustrated. Once a given aggregator starts radiating coverage to its own cell 405, the behaviour of nearby communication devices adapts accordingly.

Nearby communication devices (i.e. terminals, such as UEs) that are in idle mode will automatically camp on the newly established aggregator cell 420 (by virtue of the conventional idle mode reselection of the cell with the strongest signal strength coupled with the prioritization of LTE layers broadcast by the LTE eNodeB). If the nearby idle device thereafter enters an active mode 430, transmission starts (or does not start) over the aggregator cell 440. Where there is an ongoing existing connection through the macrolayer of the RAN (i.e. it is determined that the nearby communication device is active on the macrolayer) 410, the RAN may optionally, upon request from the aggregator controller, move (i.e. hand-off) the ongoing communication of the respective nearby device towards the aggregator cell 415. If such a request is made, transmission starts (or proceeds) over the aggregator cell 440.

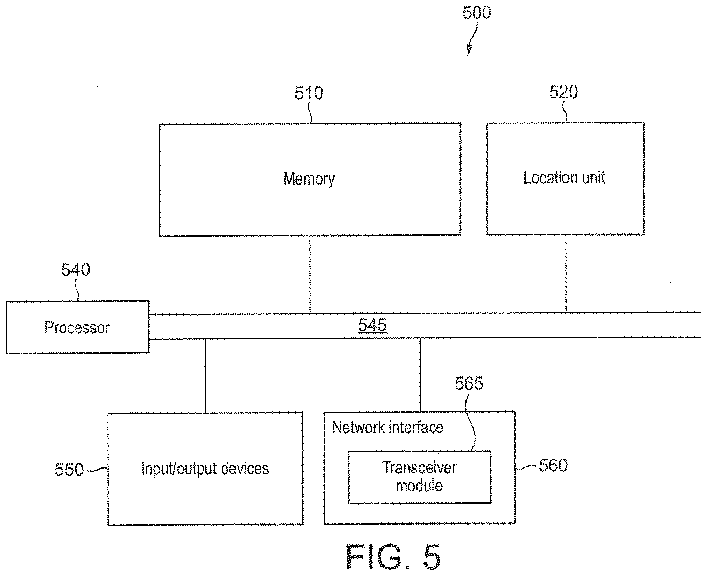

Figure 5 illustrates the functional elements of a communication device 500 suitable for use as an aggregator in the network architecture of Figure 1A, 1B, 1C, 2A or 2B.

The communication device 500 includes a memory 510, location unit 520, a processor 540, input/output devices 550 and a network interface unit 560 having a transceiver module 565. Data is transferred between the various components via a bus 545. To operate as an aggregator, the network interface unit 560, through its transceiver module 565 must be capable of establishing two separate network interfaces: a backhaul interface and a coverage extension interface. In certain implementations, the transceiver module operates in at least two sets of frequency bands: one set of bands that correspond to the RAT of the macrolayer and a further "out-of-band" set of frequencies not used by the RAT. In some cases, communications on the "out-of-band" set of frequencies use a different RAT from the macrolayer.

In certain implementations, the backhaul and the coverage extension interface might use the same working frequency/RAT as a conventional relay node in order to facilitate the deployment of multi-hop scenarios, in which chains of Radio Access Network entities are deployed. For example, a first aggregator may appear to other communication devices as a Donor eNodeB and a second aggregator may appear to the first aggregator as a conventional UE while providing its own cell to nearby communication devices appearing to them as a conventional Relay Node.

Clearly the backhaul connection from the backhaul interface of the communication device 500 need not be a cellular wireless connection and may include non-cellular wireless and/or a fixed line connection using a connection technology such as: optical fibre cable technology; ethernet technologies; a fixed line xDSL technology; microwave backhaul technology; visible light communications, VLC and/or a Wi-Fi technology.

As noted previously, it is anticipated that many of the candidate aggregators move between two or more static locations over a period of hours or days. It is therefore important that the communication device 500 can, using data obtained from the location unit 520, provide adequate reports of changes in location, which may in turn inform the controller's decisions as to whether the communication device is considered a candidate aggregator and whether, if a candidate aggregator, it should be activated/deactivated as an aggregator.

The location unit 520 may include a global navigation satellite system (GNSS) unit, such as a global positioning system (GPS) unit or the like to provide location information for the communication device 500 as well as cell synchronization if other methods are not available. Alternatively or additionally, the location unit 520 may obtain a location "fix" by inference from the RSRP together with knowledge of the location of cell sites in the macrolayer.

By obtaining a plurality of location fixes of the communication device 500 at different (known) times, the communication device 500 can determine its current mobility level. The mobility level may be determined as a binary determination, i.e. the device may be "static" or "non-static": clearly however a non-static mobility level can be more finely distinguished by characterising the degree and nature of the mobility situations, e.g. semi-static/nomadic scenarios, high mobility, static relative to others (yet changing location), etc. Alternatively, the communication device 500 may report each location fix (together with a time stamp) to the controller and the controller may determine for the current mobility level of the communication device 500. In the latter case, the persistent reporting of location fixes may incur a higher cost in terms of battery usage necessary to facilitate the transmission of such reports.

In certain examples, the communication device is not considered a candidate aggregator device if the mobility level is not "static". In other cases, there may be non-static mobility states which nevertheless qualify the communication device to be considered a candidate aggregator device (for example, the detected movement may be determined to be at a speed lower than a predetermined threshold speed, or the change in location may be within a limited geographical area). In the latter case, the controller may determine that an alternative pattern of operation (such as the selection of aggregator selection routines that are more suitable for such qualifying non-static situations) may be needed to ensure effective use of communication devices having qualifying mobility statuses.

While not shown, the communication device 500 may be powered from a battery - such as a rechargeable Li-ion battery, conventional in the field of portable cellular communication devices, such as smartphones. The level of that battery may conveniently be monitored. Alternatively or in addition to the mobility criteria discussed above, the communication device may be rejected as a candidate aggregator device if the monitored battery level drops below a battery level threshold.

In the present discussion, it will be readily apparent to the reader that many alternative and complementary factors may be used to determine whether a given communication device may be considered ready to act as aggregator: mobility status as discussed above is one of a number of useful criteria upon which readiness may be determined. Indeed, mobility status as illustrated - where a simple dichotomy is made between "static" and "non-static" status - is clearly a simplification of a more complex determination of a plurality of categories of "mobility status" (which might span multiple degrees and or types of "mobility", for example).

For a device to be determined to be "aggregator-ready" it must fulfil certain physical criteria (e.g. being switched on, capable of receiving and sending signals according to an appropriate protocol, etc.) and fulfils one or more criteria for suitability: for example exhibiting a mobility status that permits effective aggregator operation. Battery life is a significant example of a physical criteria which would also be considered to determine readiness to act as an aggregator.

Even if conditions exist that suggest it would be possible to deploy one or more aggregation layer in a cellular communication network, there must be a good reason to decide to set-up an aggregator layer: in essence there needs to be some tangible expected benefit in doing so rather than persist with the normal macrolayer operation.

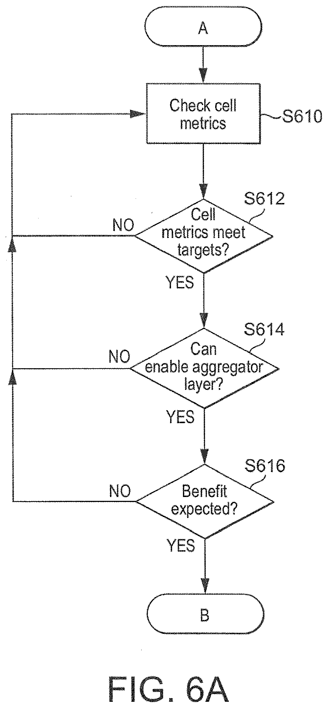

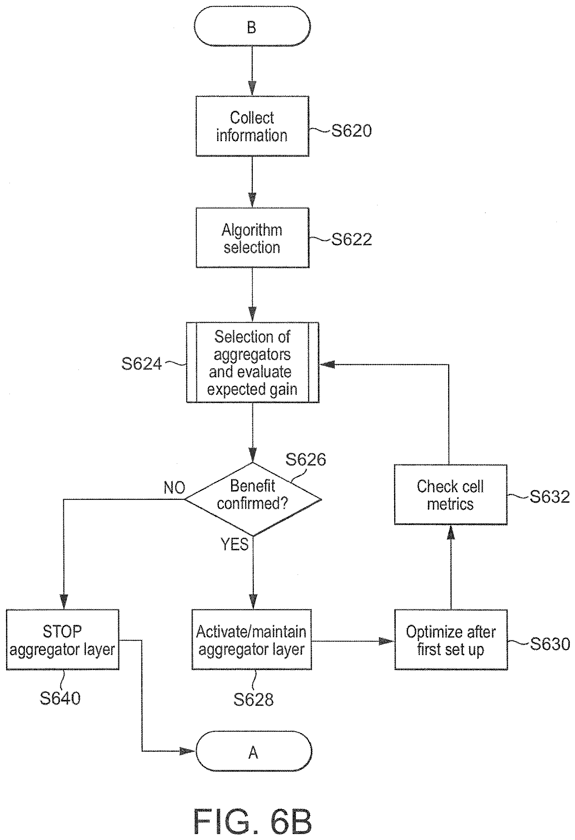

Figures 6A and 6B show a flowchart of certain operations performed by a controller entity in determining whether activation of an aggregator facility is supported.

At operation S610, the controller obtains values for one or more cell or user related metrics, referred to hereafter as "cell metrics", thereby checking the performance of the macrolayer. The cell metrics may include for example, measurements of: cell load (for instance, resource block (RB) usage), cell throughput, number of active communication devices located in predefined portions of the cell coverage area, a "happiness" value for the users (measured latency in data transfer, uplink waiting time, or a value obtained by inference from user feedback in social network services, for example); and/or control resource usage (e.g. PDCCH usage).

The cell metrics provide a measure of performance of the macrolayer that is used in determining whether the conditions in a given area of radio coverage offered by a cellular communication network support the activation of an aggregator facility. Here the given area of radio coverage may be selected from: a macrocell coverage area for at least one macrocell within the cellular telecommunications network; a coverage area for at least one sector within the macrolayer of the cellular telecommunications network; and the coverage area of the entire cellular telecommunications network.

In certain cases, the controller may be configured to define the given area of radio coverage which is to support the activation of an aggregator facility by identifying a subset of available cells for which one or more cell parameter conditions hold, e.g. more than a given number of cells in the subset have a cell metric and/or user metric lower than corresponding threshold value. This might result in the area of radio coverage which is to support the activation of an aggregator facility being a subset of the cells in the cellular network covering an entire city.

In Figure 6A, for example, this determination involves two distinct stages: operation S612, which deals with certain conditions hold that would make activation of an aggregator facility desirable (even necessary), and operation S614, which deals with further conditions which would determine whether such a facility would be feasible. In alternative approaches, the conditions that support activation of an aggregator facility may be performed in other ways, in particular operations S612 and S614 may be performed in parallel with one another or in "reverse" order; furthermore, all conditions may be assessed in a single procedure based on the cell metrics.

At operation S612, the controller determines whether the cell metrics meet target threshold values. This operation may include: determining whether cell load (i.e. RB usage) exceeds a load threshold while throughput lies below a minimum throughput threshold; determining whether the number of users in a region of the cell (such as the cell edge) exceeds a user number threshold while throughput per App falls below a minimum App throughput threshold (an App is a software application executable on a user's communication device: Apps that rely upon network connectivity may be affected if the throughput allocated is below some threshold, for instance, a video streaming App with a throughput lower than 300kbps would provide an inadequate display output); determining whether a happiness metric (whether aggregated for a number of users or a group of users or not) lies below a happiness threshold; and/or determining whether the usage of control resources (such as PDCCH) exceeds a control resource threshold.

If the cell metrics meet the target threshold conditions, the controller concludes that necessary conditions for aggregator layer deployment hold and moves to operation S614.

At operation S614, the controller determines whether certain conditions sufficient for aggregator layer deployment hold. The controller thus determined whether effective aggregator layer deployment will be possible. Operation S614 may include determining:
whether there are aggregator enabled communication devices (i.e. candidate aggregator devices) in the cell and whether these communication devices have certain characteristics in terms of mobility (e.g. they are, have been for an amount of time, and/or are expected to be, "static");
whether there are communication devices (aggregator enabled or not) in one or more macrocells with certain characteristics in terms of mobility (e.g. they are, have been for an amount of time, and/or are expected to be "static");
whether the controller has access to data concerning path loss towards the macrocell and/or amongst communication devices (e.g. UEs/terminals) and/or location information of the aggregators and/or the other communication devices;
whether there are communication devices in coverage of potential aggregators;
whether there is a matching between the capabilities (technology/band supported) between aggregators and nearby communication devices;
whether at least some of the aggregators have sufficient battery life to maintain aggregator functionality for a predetermined period of time;
whether conditions of low interference hold; and/or
whether spectrum and technology resources needed for use in deployment of the aggregator layer are available.

If the controller concludes that sufficient conditions for aggregator layer deployment hold, the controller next performs operation S616. In certain alternative approaches, the controller performs operation S616 before or in parallel with the operations at S612 and/or S614.

In operation S616, the controller makes a preliminary determination of whether a benefit for the network would be expected if the network were to deploy the aggregator layer. This preliminary determination considers a limited number of properties of the cell metrics obtained at operation S610 and thus relies upon a subset of the information necessary for aggregator layer deployment: for instance, a benefit at this stage would be expected because there were several static users at cell edge under the potential coverage of some static aggregators or because there are small cells with unused capacity in an area close to some static users but with aggregators located in their coverage area.

If it is determined that either necessary conditions (at operation S612) or sufficient conditions (at operation S614) are not present, the controller waits a predetermined period of time (by setting a timer for example) and then obtains a further set of cell metrics (at operation S610). Likewise, should it be determined that no benefit is expected from the deployment of the aggregator layer (at operation S616), the controller will again return to operation S610 and obtain a further set of cell metrics.

If however, at operation S616, the controller makes a preliminary determination that there would be an expected benefit, in principle, for the network if the aggregator layer were to be deployed, the controller initiates a more detailed phase of operation (illustrated in Figure 6B) by collecting further performance information, operation S620 (in addition to the cell metrics obtained at operation S610).

During the collection of further performance information, operation S620, the controller obtains a list of aggregator enabled communication devices (i.e. candidate aggregators) currently camped within a given macrocell, using information updates received, at temporally spaced-apart intervals, from the aggregators. In addition to the list of candidate aggregators, the further performance information may include some or all of the following information obtained from the respective aggregators:
- location (of the updating aggregator). This location information may be obtained by the aggregator by inference from the RSRP and/or using a GPS unit.
- pathloss/SINR (measured at the updating aggregator). This may be with respect to the current macrocell or a set of macrocells.
- mobility level (static or not) measured by the aggregator itself
- information on location and/or pathloss of all UEs or other network connected communication devices that are static (optionally, this may be filtered to relate only to UEs that are static and that in addition are expected to remain static by analysing and using geolocalized historical information of the UE) and that are camped/or are/have been connected there

The controller processes some or all of this performance information to evaluate the relative distance and pathloss/SINR (or similar quality) between candidate aggregators and the devices of users in the cell.

In certain examples, the controller makes a selection of aggregators from among the aggregator enabled communication devices in accordance with a single aggregator selection algorithm. In other embodiments, there may be a plurality of available aggregator selection routines (i.e. algorithms) and it is first necessary to determine which routine to adopt. When required, the operation of determining which routine to use may be any conventional selection operation.

Figure 6B illustrates one example where a plurality of aggregator selection routines are available. Here, the available respective aggregator selection routines may each be suited to respective, different performance conditions. In operation S622, an algorithm corresponding to one of these routines is determined depending upon the availability of specific further performance information, such as aggregator location information or pathloss measurement data. In cases where only a single aggregator selection algorithm is available, the determination of which algorithm to use is trivial and operation S622 may be omitted.

Once it is determined which routine (i.e. algorithm) is suited to the available further performance information, this algorithm determines which, if any, aggregator enabled devices should be activated for aggregator functionality and defines the sub-processes by which benefit (i.e. achievable gain) from aggregator layer deployment will be calculated. The algorithm thus serves to select aggregators from among the candidate aggregators for deployment of the aggregator layer. The operation of this algorithm is illustrated as operation S624 in Figure 6B.

At operation S624 (whether this is the only available aggregator selection routine or a routine determined to be suited to available further performance information at operation S622), the controller makes a selection from among the aggregator enabled communication devices, this selection being a selection of one or more aggregators based either on individual characteristics of the respective, selected aggregators or collective characteristics when the selected aggregators are considered as a group selected from among the aggregator enabled communication devices.

While the present example contemplates the use of a single aggregator selection routine within a single area, this does not preclude the use of more than one selection routine - for example, the use of a first aggregator selection routine during peak hours of the day or week and a second aggregator selection routine at other times. Furthermore, it is equally contemplated that where two areas of radio coverage are considered separately, each area may adopt a respective, different aggregator selection routine consistent with the information relative to candidate aggregator devices that can be obtained.

It is thus possible that the choice of aggregator selection routine may be fixed based on empirical knowledge (using routines for which sufficient information has been available historically, because the penetration of terminals supporting a network operator client application has become sufficiently high, say) or dynamic (based on how much information is currently available for each routine).

It is further contemplated that the choice of which selection routine to adopt may be governed by a quality metric of the effectiveness of any given routine as a function of the amount of relevant information that can be collected. By obtaining information that might be used by one or more of the possible routine and discarding the routines for which available information is such that that their quality metric is too low, the routine whose quality metric implies it can provide the highest gain for the network would then be chosen.

In certain examples, the selection of aggregators includes the selection as a group from some or all possible different groups or subsets of aggregator enabled communication devices, each group being termed an "evaluation group". An expected gain for each evaluation group is then calculated.

In other examples, the selection of aggregators is the selection of individual devices (i.e. subsets of aggregator enabled communication devices having a single member each). Here, expected gain is calculated for each individual candidate aggregator.

The expected (achievable) gain results from an evaluation of the expected improvement in a given cell metric: this cell metric may be the, or one of the, cell metrics obtained at operation S610. For example, the expected gain may be the result of a comparison between a) the value of that given cell metric when the or each aggregator is selected and b) the currently experienced (i.e. measured) value of that cell metric.

In certain cases, the expected gain may be expressed as the difference between the value of a given cell metric predicted for a given evaluation group (evaluated before actually activating that group for aggregator functionality) and the current value of the given cell metric. Where no aggregator enabled communication devices are activated, the current value of the cell metric is the measured value of the cell metric for the cellular communication network where no aggregator functionality is activated. Otherwise, the current value of the cell metric is the measured value of the cell metric for the network where a current group of aggregator enabled communication devices are activated for aggregator functionality, said current group need not be the evaluation group. The prediction of the cell metric may be a function of the further performance information collected at operation S620.

Where expected gain is determined for evaluation groups or individual candidate aggregators, the aggregator selection algorithm then assesses the respective expected gains for some or all possible different aggregators or groups of aggregators, the selected aggregator or group of aggregators may be the individual or group providing the greatest expected gain. Alternatively, the selected aggregator or group of aggregators may be selected from a subset of groups having gains that exceed a threshold gain, taking account of other practical constraints such as maintaining aggregators that are already active unless there is a good reason to stop them (e.g. battery level dropping below a level that can support continued operation or detected movement of the active aggregator).

At operation S626, the controller makes a full determination of whether a benefit for the network would be expected if the network were to deploy the aggregator layer by modelling network performance for a network with the selected aggregator or group of aggregators activated and comparing that performance to the currently measured network performance information (as collected at operation S620).

In the case of the aggregator selection using evaluation groups, the full determination of benefit for the network entails comparing the expected gain from the use of the selected evaluation group of aggregators to data representative of the current network performance.

In a specific example where one of the selected subsets of aggregators is not currently active, sufficient benefit from first activation of that selected subset would be confirmed where the measured value of a given cell metric (assuming the given cell metric is the one used in the algorithm at operation S624) is significantly higher than that cell metric measured before the activation.

In another example where the aggregator layer is activated (i.e. at least one subset of aggregator enabled communication devices are activated for aggregator functionality), sufficient benefit is confirmed when the gain is higher than one of a reference average metric (e.g. historical data) or a cell metric measured in the previous last N iterations, where N is an integer greater than 1.

In certain cases, a measured value of a first metric (metric A) is used before activation, whereas after activation, a second, different, metric (metric B) is used instead. Known pre-activation network performance indicators (often referred to as KPIs - or key performance indicators) are used in order to evaluate metric A. Estimated values of metric A are compared to known measured values of metric A, to indicate whether the network needs assistance and to deduce that activation of the aggregator layer will provide that assistance. After activation, metric B may be calculated using both the stored KPIs pre-activation, and the current KPIs measured after activation. If metric B after activation is sufficiently better than metric B before activation, the aggregator layer is maintained active.

If the determination at operation S626 is that a net benefit is indeed provided by deploying the selected device or group of devices (i.e. subset) as the aggregators, the controller activates an aggregator server (operation S628) to support the aggregator layer and instructs each of the selected communication devices to activate (or maintain active) their respective aggregator functionalities (e.g. by executing a routine in an aggregator client application). These aggregator functionalities include functionalities consistent with operation as a MiFi architecture access point (offering WiFi protocol and/or VLC connectivity to nearby communication devices) and/or as a small cell (offering connectivity using a cellular telecommunications standard).

While not illustrated in Figure 6B, the controller may conveniently launch a RAT selection routine to determine which carrier bandwidth/RAT/band will be used by each (selected) aggregator, the carrier bandwidth/RAT/band being chosen from among one or more permutations of available RAT, band, and carrier bandwidth available for the implementation of an aggregator layer in a specific cell. For instance, the RAT selection routine may determine that as LTE FDD2.6 is not used in current and/or neighbour macrocell, it can be used by all selected aggregators within range of those cells.

As discussed in relation to Figure 4, nearby communication devices may transfer some or all of their data traffic to the selected aggregator(s) differently depending upon whether they are in an "idle" or "connected" state.

In the former case, handoff of idle devices may be facilitated by the controller modifying the neighbour cell list (NCL), which is provided to devices in idle modes, with the parameters of the selected active aggregators.

In the latter case, the controller may determine whether to request a handover for a device in connected state when information such as radio measurements from communication devices in the macro cell compare unfavourably with radio measurements from communication devices using the selected aggregators (always providing such information is available at it might be from access to the relevant RRM function of the eNodeB/RNC in the macrocell). Examples of communication devices for which a handover might be requested include those devices: a) that are in the coverage area of a specific aggregator(s) and b) that have channel quality indicator (CQI) and/or RSRP in relation to the macrocell that is worse than the one of the aggregators.

While not illustrated in Figure 4, the aggregator may alternatively (or additionally) offer WiFi protocol and/or VLC connectivity to nearby communication devices (thereby operating as a MiFi architecture access point). In such cases, handoff onto the aggregation functionality may be effected by informing respective nearby communication devices which aggregators offer an access point in the cell and by commanding those communication devices close to the identified access points to enable Wi-Fi transmission.

Optionally, the controller may then seek to optimise the aggregator layer, operation S630.

Optimization by the controller may include at least one of the following procedures:
- checking, once a given nearby communication device is connected to an aggregator, whether that device has a worse CQI/SINR/RSRP with respect to the the macrocell than with respect to the aggregator, and in such a case will be (or can be) handed over to the Macro layer (e.g. by issuing a handover command or releasing the aggregation connection with redirection). Conveniently the selection parameters for this device would be changed for an amount of time to avoid unwanted ping-pong effects (i.e. hysteresis);
- checking the performance in the aggregator layer against the performance that would be expected if a given communication device were to stay in the macrolayer, depending on which information can be made available to the controller and/or to the aggregator. Examples of the performance information that may be checked include measures of user happiness metrics such as: latency (i.e. the round trip time (RTT) for transmitted and received packets or uplink waiting time. Examples of the performance information that may be checked may also include: historical data (such as throughput for specific Apps) obtained in the macrolayer in similar or same location and under the same or similar RSRP/CQI conditions;
- checking the level of interference and/or availability of resources for the spectrum/technology used in the aggregator layer and taking actions to improve these parameters (e.g. create clusters of spectrum/technology utilization, reduce utilization of those resources in the macrolayer); and
- optimizing the selection of aggregators taking account of mobility. The aggregators themselves may be required to take certain actions when aggregated users (i.e. communication devices using the aggregation facility of a selected aggregator) start mobility. Likewise, when aggregators themselves become mobile, the controller may act to alter the performance of the aggregator later, e.g. by instructing the newly mobile aggregator to switch off aggregation functionality.

Checking the performance in the aggregator layer using RTT may involve comparing RTT for the same packet using macrocell and current aggregator layer service respectively. Using uplink waiting time to check performance may involve comparing this time before and after the optimization.

Checking the performance in the aggregator layer using historical data may involve comparing historical data to actual data obtained through the aggregator. It is also possible to run periodical speed tests just to check the current quality.

Whether optimised as described or not, the controller iterates back through operations S622, S624 and S626, selecting one or more aggregators which may be identical to the aggregator(s) selected in previous iterations or may represent a group having a different constitution of aggregator enabled communication devices.

Periodically, cell metrics are checked - operation S632 - and this information is used in further iterations of operations S622, S624 and S626. The cell metrics checked here may be the same as those obtained at operation S610: equally they may be different from those cell metrics.

If the determination at operation S626 is that a net benefit is not in fact provided by deploying the selected devices (or group of devices) as aggregators, the controller halts the use of the aggregator layer operation S640. This may entail instructing all aggregator enabled communication devices in the cell to deactivate their aggregator functionality and to deactivate the aggregator layer server in the controller.

After a second predetermined time (typically longer in duration than the period characteristic of the iteration of operations S622, S624 and S626), the controller restarts first phase of determining the preliminary benefit of aggregator layer deployment at operation S610.

To provide the information needed by the controller to perform the operations described in Figure 6A and 6B, communication devices are arranged to present information upon which the controller can make its respective determinations of suitability of the device as a candidate aggregator and whether a suitable candidate is to be activated (or deactivated).

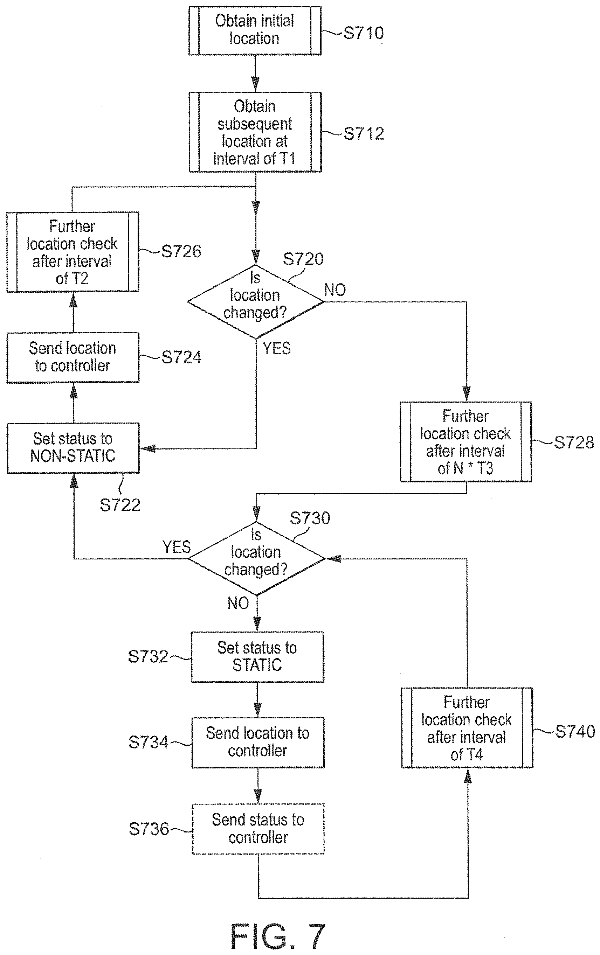

Figure 7 shows an exemplary flowchart showing certain operations of a communication device in accordance with an aspect of the present disclosure.

In Figure 7, the communication device evaluates its current location at temporally spaced-apart intervals (e.g. every T1 seconds). Once there are at least two measures of location (i.e. location fixes) it is possible to determine whether there has been any change in the mobility state of the communication device. Any given location fix is conveniently obtained with a minimum level of accuracy. The time difference between the acquisition of the location fixes is used to determine the degree of mobility (if any) between two fixes. To ensure that fixes are sufficiently far apart in time for a significant movement to be detected each fix is conveniently associated with a corresponding time stamp (which may be acquired from a connected macrocell and/or within the GPS signalling structure). Where more than one communication device is used it is contemplated that they may be operated in a synchronised manner.

An initial location fix is obtained at time T0, operation S710. At a point in time T1 seconds later than T0 a further location fix is obtained, S712.

The location fixes T1 seconds apart are compared to determine whether there has been a change in the detected location, operation S720.

In other examples, the algorithm used to determine whether a change in location has occurred may alternatively or additionally use parameters other than reported position and time, for example direction of movement or altitude.

In general terms, a potential aggregator may be considered to have moved (i.e. changed from a "static" state to a "non-static" state) if its position is displaced by a distance of D metres over a time interval Tᵢ-T₍ᵢ₋₁₎, where D and Tᵢ can be determined, calculated, signalled or otherwise obtained dependent on parameters (e.g. current mobility state).

Where the location has changed between the fixes, the mobility state is set to be "non-static", operation S722. For the sake of clarity, the scenario illustrated in Figure 7 shows the determination at operation S720 as binary between "static" and "non-static", on the basis of any detected change in location. The skilled reader will readily appreciate that alternative determinations, having more than two cases or indeed two cases decided upon different criteria, may be substituted for the current operation S720 without requiring any other alteration to the flowchart. For example the change in location between fixes may be registered as indicating a "non-static" state when the location has changed by more than a minimum position change threshold of D1 metres since last location fix.

When in non-static mobility state, new location fixes are sent to the controller, operation S724 and a further location fix is taken after an interval of T2 seconds/minutes, operation S726. Typically the time scale T2 is greater than T1, but could be the same or less than T1: sending updates will use power, computation and signalling resources etc. so this task would be performed less frequently when the latest information is that the device is in mobility (and presumably not currently for consideration as a candidate aggregator). The operation flow then returns to operation S720, where it is again determined whether there has been a change in the detected location. In this way the location is still checked in case the mobility state has changed to "static". If the communication device has become static but the latest report still indicates that its state is "non-static", the use of a T2 greater than T1 will merely result in a slight delay in considering it as a potential candidate for activation.

Where the location has not changed between the fixes, it is determined that the mobility state may be "static" but that further fixes are required to be more certain. In the illustrated case, it is considered that a communication device needs to have been static for a longer period than the interval of T1 between successive fixes in operations S710 and S712 (during initialisation) or the interval of T2 in operation S726 (in subsequent iterations).

To avoid a situation of "false" attribution of "static" status to a device (which may after all be embedded in a vehicle) just because the device has stopped temporarily (e.g., car that has stopped at a light, to re-fuel or in heavy traffic, or a car that has temporarily parked), the communication device obtains a further location fix at time N ^{∗} T3 seconds later, where N and/or T3 could be dependent on the type of communication device (e.g., in a car, residential) or type of scenario of installation (e.g., at a bus terminal, in a scenario that is likely to be static), operation S728. For example, if the scenario is likely to be static, it may be adequate to set N or T3 equal to zero or close to zero as it may be assumed that an earlier indication of "static" status at operation S720 is likely to be correct.

The location fixes N ^{∗} T3 seconds apart are compared to determine whether there has been a change in the detected location, operation S730. If at the end of the period N^{∗}T3 the position is still unchanged, the mobility state is set to "static", operation S732. The current (static) location fix is sent in a reporting message to the controller, operation S734. Optionally, the communication device may also indicate that it is in the "static" state (either in the same reporting message as operation S734 or in a separate status reporting message), operation S736. This option may be considered convenient as it facilitates understanding of why the location fix was reported. Alternatively, the controller may infer that because it has received a reporting message having a location fix from the communication device, it can conclude that the reporting communication device is static.

Where location fixes are derived from GPS-based position signalling, the location fix may be sent as GPS location information (i.e. based upon the WGS84 standard) rather than latitude and longitude alone. Conveniently, the reporting message may include an indication that the location information is in GPS position format. Alternatively or additionally, the reporting message may include an indication that GPS information is available, regardless of the source of the reported location fix.

A reporting message (either the same reporting message as operation S734 or in a separate additional information reporting message) may optionally include additional information, for instance: specifics of the candidate aggregator: e.g. device model, software release information, hardware identifiers, etc; device state, such as battery status; and/or radio information, such as camped Cell Id, Radio coverage quality, CQI of radio channel used to perform such a communication, neighbour cells for the communication device modem, etc.

The flow then iterates, whilst the communication device is in mobility state "static". The communication device obtains a further location fix after an interval of T4 seconds, operation S740. T4 is typically a shorter time period than T2, since it is desirable to avoid a communication device being considered "static" when it is in fact "non-static": any static communication device is a potential candidate aggregator, so any false attribution of "static" status may have a detrimental effect on the delivery of an effective aggregator layer. The operation flow in the "static" mobility state then returns to operation S730, where it is checked once again whether the detected location has changed. Any change in location results in the mobility state being set to non-static and location fixes being taken at intervals of T2 (rather than T4).

In a further arrangement of the present disclosure, more than one aggregation layer is activated within the network. In certain cases, respective aggregation layers are activated and deactivated in corresponding sectors or groups of sectors of the cellular network. In certain cases aggregation layers are established within one sector or cell that extend the coverage of that sector or cell to encompass communication devices served by neighbouring sectors or cells: thus the benefit to the network of the deployment of any given aggregation layer may be calculated for a region of the radio coverage of the cellular network that includes more than one sector and/or cell.

Certain arrangements of the present disclosure relate to the dynamic activation of one or more communication devices to provide an aggregation layer. Each of the one or more communication devices appears, to the macrolayer as a UE; while to other communication devices, they each appear as a class of small cell base transceiver station. The dynamic activation is due in part to determining if a benefit could be expected by such dual UE/small cell activation: that might arise if the macrolayer doesn't provide a prerequisite quality of service to the other communication devices. Dynamic activation also requires a more fine-tuned determination dependent upon selecting a set of devices capable of the dual UE/small cell or UE/MiFi functionality for activation and determining whether the network would benefit from the activation of that particular group. Only where the network is determined to benefit on the basis of this fine-grained determination will the selected communication devices be activated as hybrid UE/small cells (or UE/MiFi devices).

Likewise certain examples of the present disclosure relate to the dynamic deactivation of an aggregation layer provided by certain communication devices.

Considering once more the simplified example of a binary determination of whether a communication device is in "static" or "non-static" state, it is clear that once an aggregator device has activated an aggregator mode (and radiates a small cell, VLC or WiFi coverage, for example) it is desirable to monitor the location of the device in case there is a change in that mobility state and method to deal with change of mobility state: "non-static" state being presumed incompatible with effective aggregator functionality.

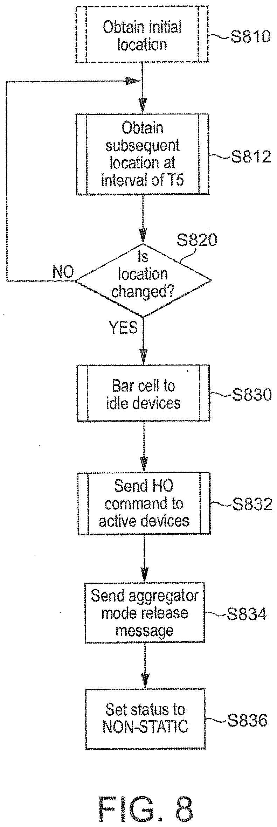

This scenario is illustrated in Figure 8.

Once the communication device has been activated, the communication device monitors its location every T5 seconds (obtaining an initial location fix at operation S810, if necessary and further location fixes at operation S812). T5 needs to be a very short time as it is crucial to determine as soon as possible whether the communication device is still "static" since the performances of the network may be affected. Note that this may be the same iterative monitoring of mobility status as at operation S740 of Figure 7 or a distinct iteration at a different time interval specific to monitoring the operation of active aggregator devices.

The location fixes obtained at operations S810 and S812 are compared, operation S820, and if location changes (to a predetermined degree of accuracy, etc.), the communication device will immediately bar the cell (so that the UEs in idles will not connect), operation S830 and send handover commands to all the communication devices connected to the aggregator cell and to the macrocell, operation S832. The handover procedure from aggregator cell to macrocell may then be handled according to any conventional standardised handover procedures.

The communication device sends the handover command because it effectively operates as a base station for the aggregator cell when it is activated.

The cell barring is important in order to prevent nearby communication devices in idle mode from attempting to connect to the cell radiated by the communication device, while that cell is still being radiated, to support the handover operation, for instance.

Conveniently the deactivating aggregator device sends the controller a message including an indication that aggregator-state has been released giving the cause as "mobility", operation S834. Additionally, the deactivating aggregator device may then update its mobility state to "non-static", operation S836.

The communication device may additionally monitor its battery life every T6 seconds. As noted previously, low battery level may preclude the communication device from being considered a candidate for activation. If expected remaining battery duration is lower than T7 seconds/minutes, the active communication device may conveniently gradually deactivate the aggregator mode by performing operations similar to operations S832 and S834. In this case however, handover commands will be executed, and confirmed completed, one at a time, before sending out further handover commands.

As will be apparent from the preceding discussion, it is assumed that the interactions between controller and communication device are governed by a shared communication protocol.

Using this protocol, the controller can send information requests to one or more communication devices (aggregators), specifying any additional information it wants to receive.

The communication device likewise uses the shared protocol to respond to such information requests, providing the requested information, which may for instance consist of the following:
- Mobility State
- Communication device specifics: e.g. device model, software release, hardware identifiers, etc.
- Device State: battery status
- Radio information: Serving Cell Id, Radio coverage quality (e.g. Serving Cell RSRP, Serving Cell RSRQ, etc.); CQI of radio channel used to perform such a communication, Neighbour cells for the UE modem
- Radio measurements executed on neighbour cells, detected cells on other LTE frequencies that are not part of the neighbour list, Wi-Fi access point identifiers (i.e. SSIDs) and strength detected onto Wi-Fi receiver

Conveniently, the communication device may maintain a protocol connection open by sending dummy bits for the next Z seconds, otherwise it stops sending dummy bits.

Using this protocol, the controller can also send commands instructing the Communication device to enter into aggregator state (i.e. as a either a small cell and/or Wi-Fi Access point). The communication protocol for such a command includes a set-up command (sent to the communication device) providing the following information: LTE carrier to be used for transmission, and main parameters; transmission, TX, power to be used: (default is "MAX TX Power); optionally, a parameter for setting-up a second carrier; optionally, a parameter to set-up a Wi-Fi Access Point; time of the day in which the cell shall start radiating; Parameters needed to manage the status of local algorithms within the Communication device whilst in the aggregator state.

Once the command to enter aggregator mode is received, the communication device uses the shared communication protocol to obtain, from a controller database and/or a database within the Operational Support System (OSS) server, the parameters needed to set-up the aggregator cell: for example, IP addresses (if not derived with a fixed rule from current R-UE IP address). Alternatively or additionally, the communication device may use parameters used last time it acted as an aggregator, provided that some criteria are still met: for example that the location is still the same as last time; that, while the location has changed, the RAU is still the same; that, while the location has changed, the R-U camped in the same cell as last time. The method by which the parameters needed to set up the aggregator are obtained will be described in greater detail below.

Once the communication device has the information needed to set-up the aggregator cell, it prepares its transceiver module (565, Figure 5) to be ready to radiate. The communication device then starts radiating at the requested Time of the Day. The Communication device then confirms to the controller that it is radiating (i.e. that the aggregator mode is active).

Whilst the communication device is in aggregator state, the communication protocol may also be used by the controller to request provision of additional information, such as: Battery status; Number of connected communication devices; Average Resource Blocks occupation; Average CQIs of the connected UEs; and Average CQI of the connected Modem.

In a typical telecommunications network architecture that includes a radio access network (RAN), a core network (CN) and a packet data network (PDN), communication devices, such as mobile terminals, user equipment (UEs) and wireless access stations, establish wireless connections to the network by means of the RAN. In the LTE standards, the core network is referred to as the Evolved Packet Core (EPC) and the data transferred over this wireless connection are carried by a virtual connection between the UE and the PDN, known as an "EPS bearer" (where EPS stands for Evolved Packet System).

Within communication devices that offer aggregator facilities as LTE small cells, the network interface unit 560 sets up a connection to the EPC using an EPS bearer as transport layer. Network interface units 560 of these communication devices thus connect to the macrolayer in a conventional manner, appearing to the macrolayer as if they belong to a conventional UE. For convenience, such LTE small cell are added to the same Routing Area (RA) as the macro cell providing coverage to the small cell.

Optionally, such devices may be assigned a different security profile so that the "conventional" connection to the EPC may be adapted to handle an alternative connectivity to a Security Gateway (SecGW) within the EPC. Small Cell might then be allowed to connect to the EPC without establishing their own IPSec (since Small Cell traffic goes through an LTE modem (i.e. a macrolayer interface of the network interface unit 560) that connects to a macro cell, and since that macro cell is in turn connected to the SecGW).

Conveniently, this "conventional" connection also allows voice and SMS services to be delivered using a legacy circuit-switched network such as GSM. So-called Circuit Switched FallBack (CSFB) within LTE may be necessary to support circuit-switched calls in some networks.

To implement the connection 1) between the communication device in aggregator mode and the EPC and 2) between the aggregator device and nearby communication devices, the network interface unit 560 includes two separate network interfaces: a coverage extension interface arranged to provide the services of a normal Small (or Pico) Cell and a "backhaul" interface, which serves to provide "conventional" connectivity to the EPC. The network interfaces are paired when the communication device is in aggregator mode. In the following discussion the "backhaul" interface is referred to as "R-UE" in recognition of its UE-like appearance to the macrolayer.

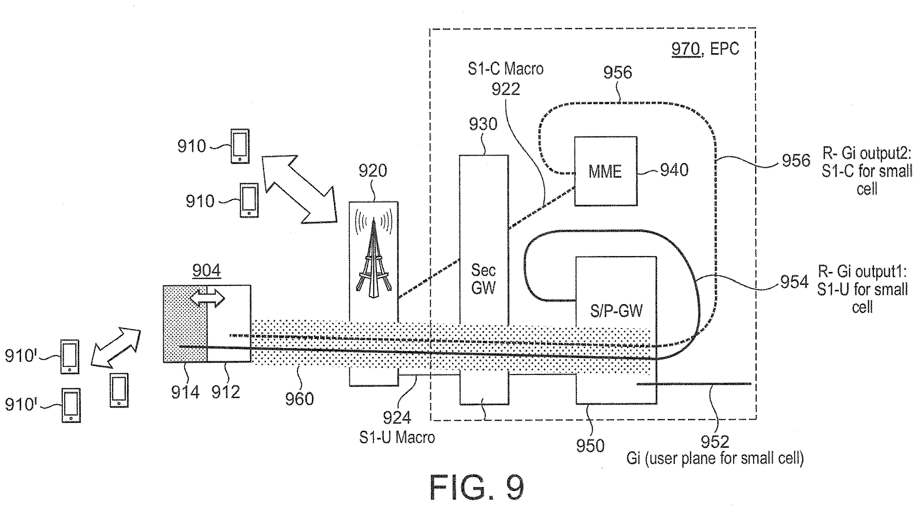

Figure 9 illustrates diagrammatically how an eNodeB in the macrolayer, provides LTE coverage (typically FDD) to a set of UEs 910, amongst them an aggregator device 904 having an interface R-UE 912. Certain UEs 910' are shown camping on the coverage area provided by the aggregator device 904 through its small cell facility 914.

A relay bearer 960 is established by the R-UE 912 through the macro layer (i.e. eNodeB 920) and into the EPC 970. The relay bearer 960 transfers data from the aggregator device 904 across a security gateway (SecGW) 930 to a further gateway 950 (which may be a serving gateway S-GW, in which case the relay bearer is strictly termed an E-UTRAN Radio Access Bearer, E-RAB, or a PDN gateway P-GW that provides an interface to the PDN, in which case the relay bearer is strictly termed an EPS bearer). The control node in the EPC is the Mobility Management Entity (MME) 940: this node serves to control the behaviour of the entities in the EPC and terminates certain communications from the small cell after they have been output from the relay bearer 960. The term "relay bearer" is used to refer both to EPS bearers and to E-RABs between aggregator devices and further gateways (e.g. the S/P - GW 950) in the following discussion. For the sake of simplicity, unless the context indicates otherwise, the term "EPS bearer" is used throughout to refer to both "EPS bearer" and "E-RAB" interchangeably.

The "normal" output of the S/P - GW 950 is carried over a Gi interface 952. Where the relay bearer output (R-Gi) includes S1-U interface data (i.e. user plane data) for the small cell, 954, this is terminated in the S/P - GW 950. Where the relay bearer output (R-Gi) includes S1-C interface data (i.e. control plane data) for the small cell, 956, this is terminated in the MME 940. In this specification, S1-C is used as a synonym of what is termed in 3GPP standards S1-MME. S1-C interface data (i.e. control plane data) for the macro cell, 922, is also terminated in the MME 940; while S1-U interface data (i.e. user plane data) for the macro cell, 924, is also terminated in the S/P - GW 950.

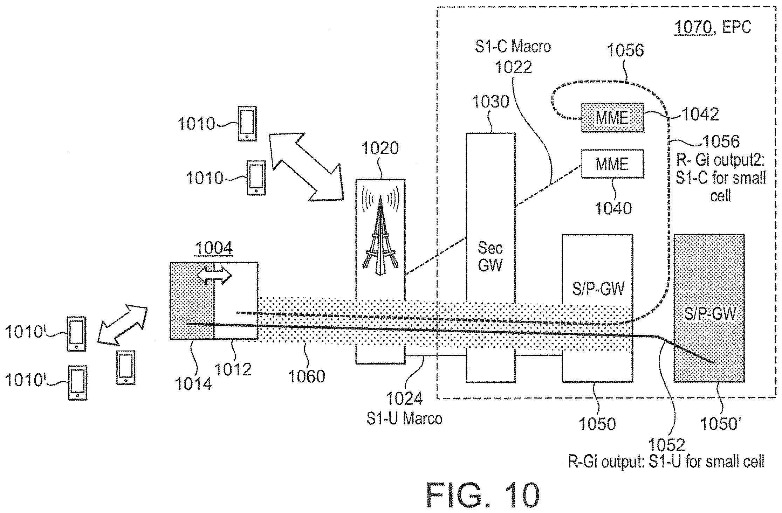

In as variation of the arrangement of Figure 9, the functions for macro and small cell operation are logically split as if they were being handled by different EPCs. Figure 10 illustrates this logical division.

As for Figure 9, Figure 10 illustrates an eNodeB 1020 representing macrolayer LTE coverage provided to a set of UEs 1010, amongst them an aggregator device 1004 having an interface R-UE 1012. Certain UEs 1010' are shown camping on the coverage area provided by the aggregator device 1004 through its small cell facility 1014.

A relay bearer 1060 is established by the R-UE 1012 through the macro layer (i.e. eNodeB 1020) and into the EPC 1070. The relay bearer 1060 transfers data from the aggregator device 1004 across a security gateway (SecGW) 1030 to a first logical gateway 1050 (which, as for Figure 9, may be a serving gateway S-GW or a PDN gateway P-GW that provides an interface to the PDN). A first logical control node 1040 serves to control the behaviour of the entities in the EPC 1070 and terminates certain communications from the macrolayer. A second logical control node 1042 terminates certain communications from the small cell after they have been output from the relay bearer 1060.

The "normal" output of the S/P - GW 1050 is carried over a Gi interface to the PDN. Where the relay bearer output (R-Gi) includes S1-U interface data (i.e. user plane data) for the small cell, 1054, this is terminated in a second logical gateway, S/P - GW 1050'. Where the relay bearer output (R-Gi) includes S1-C interface data (i.e. control plane data) for the small cell, 1056, this is terminated in the second logical MME 1042. S1-C interface data (i.e. control plane data) for the macro cell, 1022, is terminated in the first logical MME 1040; while S1-U interface data (i.e. user plane data) for the macro cell, 1024, is terminated in the first logical gateway S/P - GW 1050.

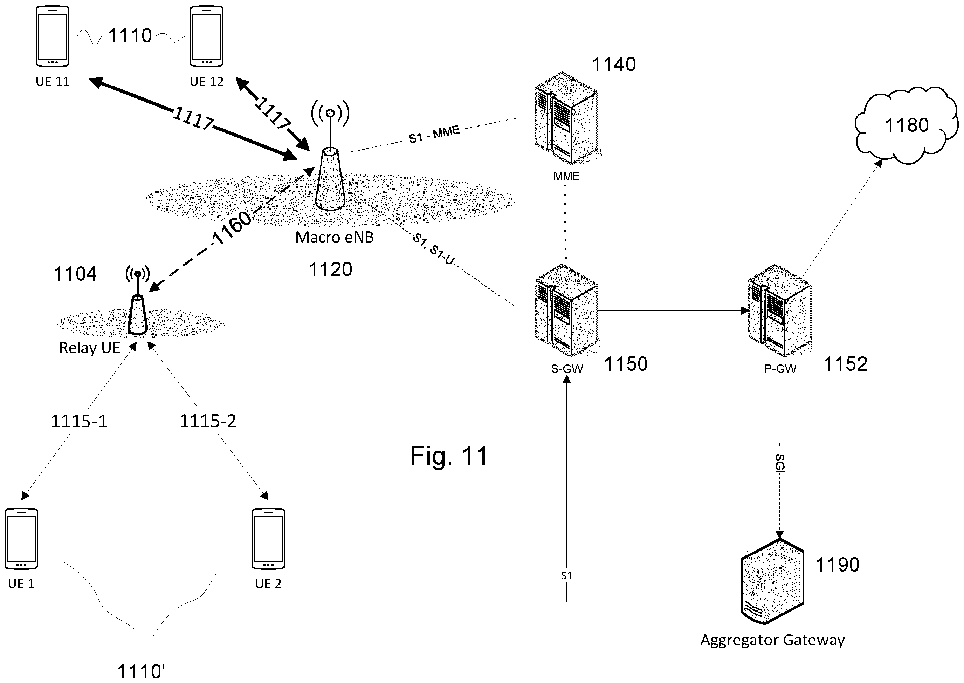

Figure 11 illustrates the same architecture as Figures 9 and 10. An eNodeB 1120 provides macrolayer LTE coverage to a set of UEs 1110, amongst them an aggregator device (i.e. Relay UE) 1104. Certain UEs 1110' are shown camping on the coverage area provided by the aggregator device 1104 through its small cell facility.

For each of the UEs 1110' camping on the coverage area provided by the aggregator device 1104 through its small cell facility, at least one EPS bearer 1115 is established. This EPS bearer 1115 has a corresponding Quality of Service (QoS) Class Indicator (QCI) that represents a predetermined (and standardised) level of treatment for the data packets of any given communication (the service data flow, SDF). Thus a first of the UEs 1110' may have an associated EPS bearer 1115-1 that is configured to carry real-time service (e.g. conversational voice) data for which the QCI may be 1, while another may have an associated EPS bearer 1115-2 that is configured to carry non real-time service data (e.g. application data like web page data or email) with a lower QCI of 8 or 9. In the main, the QCI corresponds to the priority assigned to the packets of any given service having an EPS bearer: the voice data would correspond to a higher priority than the application data because voice data is less tolerant of even relatively short packet delay.

QCI is one of a small group of QoS parameters that describe the packet forwarding treatment that data in the EPS bearer 1115 will receive between the UE 1110' and an S/P-GW 1150 (or 1152). A table of the standardised QCI values may be found in 3GPP TS 23.303 (Table 6.1.7 of version 13.4.0). While the present discussion refers specifically to QCI, the reader will readily appreciate that other quality indication parameters are available in the LTE standards, such as the allocation and retention priority (ARP), guaranteed bit rate (GBR) and (where bitrate is guaranteed) Maximum bit rate (MBR) may be used as alternative quality indication quality indication parameters or in combination with QCI.

Backhauling data from more than one UE 1110' each having at least one EPS bearer 1115 with a respective, potentially different, QCI value presents a challenge when considering which QCI value to assign to a relay bearer 1160 between the Relay-UE 1104 and the S/P - GW 1150 (1152).

At times when the macro layer (i.e. eNodeB 1120 responsible for the macrolayer cell providing the backhaul) is experiencing high load (also referred to a "congestion"), providing a certain level of service is especially important. Indeed there are circumstances when a presumption that any EPS bearer 1160 providing backhaul for aggregate can always be given high QCI may be detrimental to the overall operation of the macrolayer network.

For relay equipment, such as the Relay-UE 1104, and indeed the communication device 104 with active aggregator modes in any of Figure 1 to 9, i.e. aggregators), it is noted that the QCI of the relay bearer 1160 should not be assumed to be constant. It has been determined that improved network efficiency may be achieved by selecting and changing the QCI assigned to relay bearers (from relay equipment to S/P-GWs) over time, depending on the QCI of the component EPS bearers 1115 (for individual communication devices camped on the cell of the relay equipment) and/or load status in the macrolayer network.

Selection of an appropriate QCI may be made in a number of ways including: a) highest QCI for all current connected devices 1110'; b) conditional highest QCI, based on number and/or QCI level of current connected devices 1110'; and c) conditional highest QCI, based on macrolayer load at high QCI level, as well as number and/or QCI level of current connected devices 1110'.

These individual techniques may be used as alternatives to one another or in combination with at least one other technique.

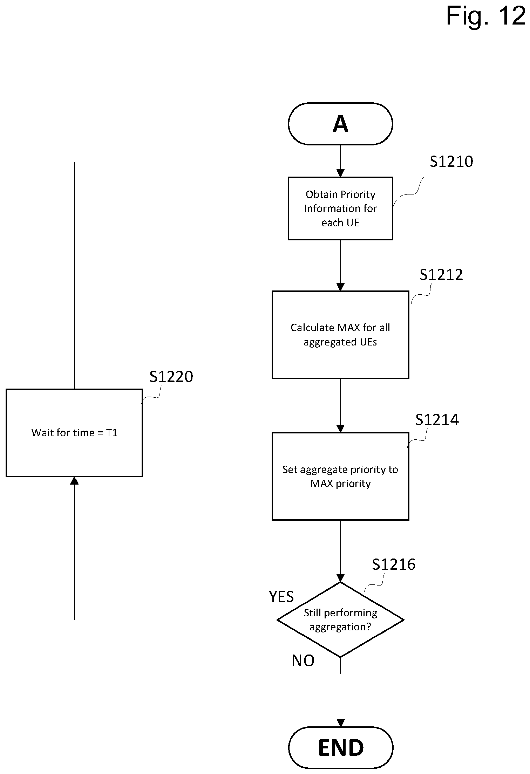

In the most straightforward technique, illustrated in Figure 12, the QCI (a specific example of priority information) of the "relay" bearer 1160 (i.e. the EPS bearer from the relay equipment to the S/P-GW in the Core Network, EPC) is set by the relay equipment (or a controller entity on behalf of the relay equipment) to be the maximum amongst the QCI used by the component EPS bearers that connect individual communication devices to the EPC via the relay equipment. Every T1 secs the relay equipment reviews the QCIs of the component bearers under its control, determines the highest one, and initiates a QCI change, if a current QCI differs from the highest QCI among the component bearers.

In step S1210, the priority information is obtained for each connected communication device (e.g. the QCI level for each EPS bearer 1115 is determined) by the relay equipment. This information is conveniently contained in messages (e.g. E-RAB SETUP REQUEST and/or E-RAB MODIFY REQUEST messages) sent to the Relay-eNB (i.e. the relay equipment) for each connected UE by the MME using S1AP signalling.

The relay equipment thus obtains priority information for each connected communication device from the MME. The MME may in turn obtain this information in S1AP signalling from the UE: alternatively, the MME may set the QCI based on some policy.

In certain embodiments, the relay equipment incorporates a scheduler configured to determine which data packets have to be served first. This is conventional for a base station transceiver in many telecommunications standards (including the 3GPP UMTS and LTE standards). The conventional scheduler makes use of priority information to determine priority of scheduling. In the terms used in LTE, the priority information may include a quality indicator called QCI; the equivalent priority information in 3G/UMTS includes THP/ARP and traffic class. Where the relay equipment implements one of these standards, it can be understood that such a quality indicators are already known by the relay equipment.

In step S1212, the priority information obtained for each connected communication device is processed to determine the priority information that corresponds to the highest priority, MAX.

The priority level for the relay bearer is then set, at step S1214, to the highest priority, MAX.

Provided the relay equipment is still operating to provide aggregation (step S1216), the equipment then waits for a predetermined interval, T1, S1220 and then returns to step S1210.

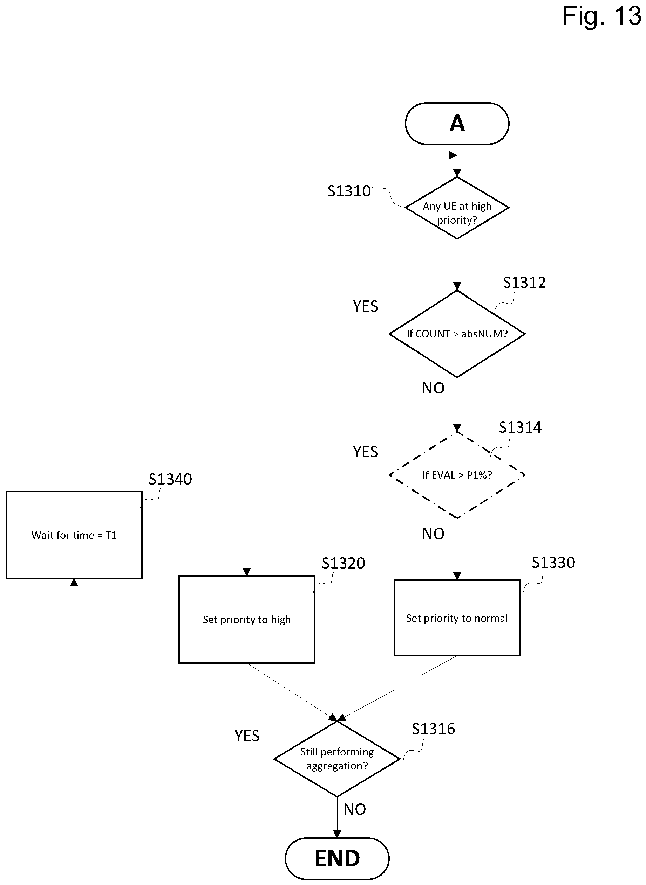

In a variation on the previous technique, the QCI of the relay EPS bearer is set to the maximum amongst the QCI used by the component EPS bearers, provided none of the used QCI levels are in a subset of levels considered "very high" (for example QCI levels 1 or 2). This is illustrated in Figure 13.

Where at least one component EPS bearer that connects individual communication devices to the EPC via the relay equipment is determined to be using one of the high priority subset of QCI levels (i.e. QCI 1 or 2), Step S1310, the relay equipment further determines one or more of: the proportion of traffic destined for backhaul that is due to the or each communication device using one of the high priority subset of QCI levels; and the number of such devices currently using the relay equipment for backhaul. If the amount of throughput over the relay link associated with QCI levels in the subset of levels is higher than a predetermined threshold value P1 (as a percentage of the total amount of backhauled traffic of the relay unit, say), step S1314, and/or if the number of connections at QCI values in the subset of levels is higher than a predetermined threshold number of communication bearers, *absnumhighQClusers,* step S1312, a QCI level is set that corresponds to a QCI level in the subset of levels for the backhauling, step S1320, otherwise a QCI level is used that is the highest available QCI level outside the high priority subset of levels instead (i.e. QCI level is set at 3, where the subset contains QCI =1 and QCI=2), S1330.

Provided the relay equipment is still operating to provide aggregation (step S1316), the equipment then waits for a predetermined interval, T1, S1340 and then returns to step S1310.

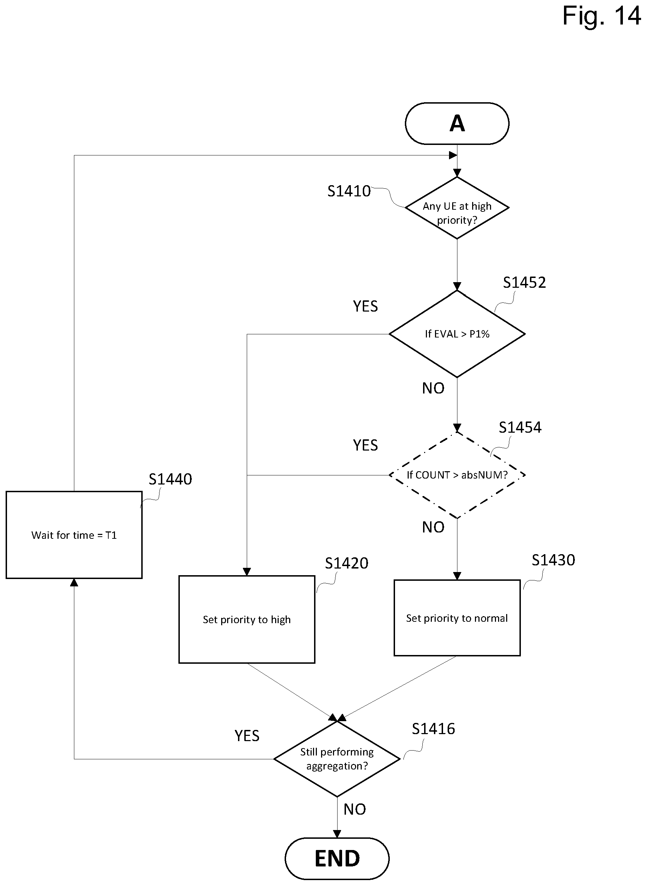

The test of the amount of throughput over the relay link associated with QCI levels in the subset of levels is against the predetermined threshold value P1, step S1314, is presented as optional in Figure 13 - it is however essential in the alternative scheme in Figure 14, as step S1252.

Likewise the test of the number of high priority component bearers (step S1312/S1454) is optional in Figure 14 but required in Figure 13.

Figure 14 illustrates that the tests against the predetermined load threshold value P1 and the number of high priority component bearers (step S1312/S1454) can be performed in a different order, if at all.

In a variation on the previous conditional technique, the QCI of other EPS bearers 1117 associated with communication devices connected to the macrolayer and using the Macro Cell to provide backhaul (i.e. the communication devices 1110 in Figure 11) is also considered.

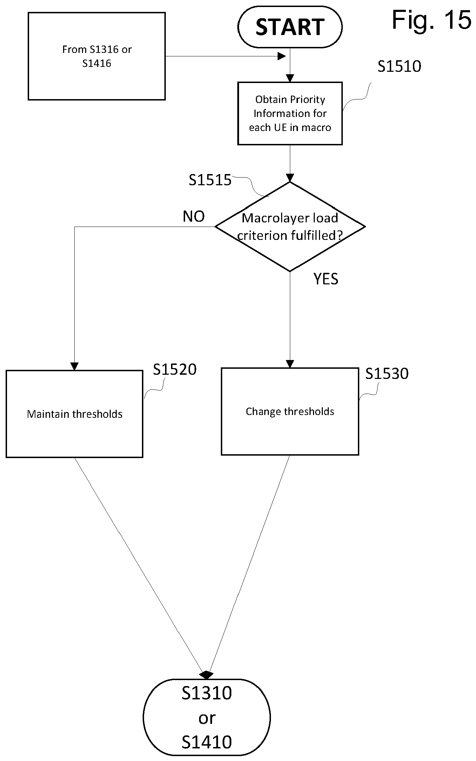

Figure 15 illustrates a further variation in which the network load due to other EPS bearers 1117 is considered.

The priority information is obtained for each communication device 1110 connected via the macrolayer eNB 1120 (e.g. the QCI level for each EPS bearer 1117 is determined), Step S1510.

In a first case, not illustrated, where a high proportion of these other EPS bearers 1117 are determined to be using one of a further subset of QCI levels (i.e. QCI 1 and/or 2), the QCI level of the relay EPS bearer 1160 is set at the highest available QCI level outside the (first) subset of levels (and not to one of the very high QCI levels). Thus, when the macrolayer eNB 1120 is loaded with delay sensitive traffic on other EPS bearers 1117, relay traffic is given adequate priority without being accorded very high priority: in these circumstances, the mere presence of a portion of the relay traffic on high priority component bearers does not mean that *all* relay traffic should enjoy high priority at the expense of equally high priority traffic on other EPS bearers 1117.

In a second case, where either a second threshold number, *highQCImacrousers,* of these other EPS bearers 1117 are determined to be using one of a further subset of QCI levels (i.e. QCI 1 and/or 2) or the resulting load at the macrolayer from other EPS bearers with high QCI levels is determined to be below a predetermined network load threshold, P2 (in step S1515), the threshold number of communication bearers *absnumhighQClusers* and/or the predetermined threshold value P1 (of the ratio of high priority QCI level throughput to total throughput at the relay unit) may be changed (e.g. increased), in step S1530. This change of thresholds is based on an assumption that the macrolayer can tolerate a certain amount of non-priority connections being marked as high priority connections (i.e. connections which are marked as a higher priority than in actuality is strictly necessary) coming from the relay layer provided the number of higher priority connections handled by the macrolayer does not exceed a level that causes undue contention other high priority EPS bearers in the macrolayer. If the threshold value P1 or threshold number *absnumhighQClusers* were not increased, extreme overload scenarios might arise where non-priority EPS bearers compete with priority EPS bearers just because the former have been routed via a relay unit.

In the preceding discussion, the comparison of macrolayer high priority load to a reference macrolayer load is performed by the relay equipment, the priority information being obtained directly from the macrolayer eNB 1120 or from a controller entity (such as AC 102 in Figures 1A-1C).

In an alternative embodiment, this comparison is performed by a controller entity and the outcome of the comparison is communicated to the relay equipment. In this case, the relay equipment conveniently transmits (real-time) priority information concerning the data traffic handled by the relay equipment (i.e. the respective QCI values for each component EPS bearer 1115) to the controller entity. The controller entity is conveniently provided with direct access to information from the macrolayer eNB.

While there are associated complexities, the real time priority information may alternatively be transmitted via the EPC.

The transmission of (real-time) priority information for each component EPS bearer 1115) by the relay equipment to the controller entity necessitates a protocol for reporting priority information (e.g. QCI-usage) from the relay equipment to the controller entity. This reporting is preferably performed on the basis of one or more of the following bases (alone or in combination):
a) Periodic (i.e. at predetermined intervals)
b) Triggered by a specific controller entity request (e.g. when the controller entity detects an increase of load on the macrolayer eNB that exceeds a threshold)
c) Event triggered by the relay equipment, e.g. when one or more QCI 1 or 2 are added to the mix of QCIs served by the scheduler of the relay equipment.

The changed threshold(s) (or maintained thresholds - S1520 - where the macrolayer load does not fulfil a load criterion at S1515) are then used in the flow of Figure 13 or Figure 14. Rather than return to steps S1310 or S1410 after a wait of T1 seconds, the flow of these steps may instead return to step S1510 (so that the macrolayer load is considered every T1 seconds too).

Furthermore, in certain examples, the relay EPS bearer 1160 is set to the maximum amongst the QCI levels used by the component EPS bearers 1115 that connect individual communication devices to the EPC via the relay equipment 1104 in cases where: (1) either a second threshold number, *highQCImacrousers,* of the other EPS bearers (i.e. bearers using the macrolayer) are determined to be using one of a further subset of QCI levels (i.e. QCI 1 and/or 2) or the resulting load at the macrolayer from other EPS bearers 1117 with high QCI levels is determined to be below a predetermined network load threshold, P2, and (2) provided none of the used QCI levels are in the subset of very high QCI levels.

In certain examples, the relay equipment, such as the Relay-UE 1104 (912 in Fig 9 or 1012 in Figure 10), may establish one or more further relay EPS bearers 1160' in addition to the relay EPS bearer 1160 mentioned above (the so called "default" relay EPS bearer). The further relay EPS bearers 1160' may be established with specific QCI levels that differ from the QCI level in the default relay EPS bearer and from one another (e.g. the default may have QCI 1, a first further relay bearer - QCI 5, and another - QCI 9). The relay equipment 1104 is then configured to select component EPS bearers 1115-1, 1115-2, ... and route their traffic through a respective one of the relay bearers 1160,1160' ... according to the indicated QCI of the component EPS bearers 1115. In order to facilitate bearer change for the component bearers 1115, the system may be further provided with an aggregator gateway 1190 (as illustrated in Figure 15). The aggregator gateway 1190 serves to receive traffic (i.e. S1-U interface data) originating at the relay equipment 1104 and modifies the received EPS bearers 1115 to mask the bearer change when sending traffic back to the S-GW 1150.

In certain examples, the QCI level for the (or each) relay EPS bearer is set in signalling from the relay equipment to an EPC entity (such as a S-GW, P-GW, Policy and Charging Rules Function - PCRF and/or MME). Changes in the QCI level may be requested in signalling during an ongoing connection. For example, the Relay-UE can send a BEARER RESOURCE MODIFICATION REQUEST message to the MME using Non-Access-Stratum (NAS) signalling to request a change in the QCI associated with an active relay EPS bearer.

Alternatively, the default EPS bearer may be disconnected and then immediately reopened, the reconnection signalling may then include a request for the QCI level of the new connection to be the newly determined QCI level. In a further alternative, the default EPS bearer may be disconnected, after waiting for the conventional RRC connection reestablishment procedure, requesting a change to the newly determined QCI level in the RRC signalling.

In certain examples, an application layer function operates within the relay equipment. The application layer function sends a change request to an aggregator controller entity to change the QCI level of the default EPS bearer for the relay equipment. The aggregator controller entity then transfers the change request to the core network entity via at least one of an Operations Support System, OSS, entity and/or a base station entity. In one case, the change request is sent by the OSS entity to a base station entity (e.g. the macrolayer eNodeB serving the relay equipment) and the base station entity in turn requests a QCI level change to the EPC entity.

In a variation of the above, the aggregator controller entity then transfers the change request to a core network entity that is specifically responsible for Quality of Service (i.e. a PCRF and/or MME).

It will be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the appended claims.

For example, whilst embodiments described in the foregoing description refer to LTE, it should be noted that the aggregator architecture described may equally be deployed in telecommunications networks based on other cellular telecommunication architectures, for example 2G, 3G, LTE-Advanced (3GPP Release 10 onwards), future architectures (e.g., 5G), as well as WD-CDMA and WiMAX. The aggregator architecture is agnostic to the specific type of RAN used. In other words, the aggregator controller/controller entity is adapted to work with any RAN and/or combinations of RANs. This is, for example, one of the reasons why in certain embodiments the aggregator controller/controller entity is independent of the RAN. Similar observations apply for the communication device for providing an aggregator facility.

In addition, it will be apparent to the reader that the term radio access technology (RAT) may extend to include related technologies such as conventional WiFi technologies (i.e. compliant with the IEEE 802.11 family of standards) and/or VLC technologies, where the context requires or allows this.

Furthermore, while the above description describes the aggregation layer as providing a bridge to the cellular network for communication devices that are at the edges of cells, the skilled reader will appreciate that dynamic coverage "blackspots" may arise elsewhere within radio coverage regions (for example, due to equipment malfunction, unusual usage patterns, and/or features of the natural or built environment).

The reader will furthermore appreciate that aspects of the foregoing disclosure apply equally and without loss of generality to aggregators (and candidate aggregators) that are fixed in a single location as to aggregators (and candidate aggregators) that are in an alternative mobility state: such as nomadic or mobile.

It will also be well understood by persons of ordinary skill in the art that whilst the described embodiments implement certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software.

## Claims

1. A first communication device (104, 204, 500, 904, 1004, 1104) for providing aggregator functionality to one or more second communication devices (110, 210, 910', 1010', 1110') in a cellular communication network, the first communication device comprising processing circuitry configured to:
obtain, for the or each second communication device, quality indication information that indicates a preferred quality of a communication bearer between the second communication device and a core network entity of the cellular communication network, wherein the quality indication information is a Quality of service Class Identifier, QCI, value;
determine aggregate quality indication information based on the respective quality indication information; and
request a change in the preferred quality of a relay bearer between the first communication device and the core network entity in accordance with the determined aggregate quality indication information.

2. A communication device as claimed in claim 1, wherein the processing circuitry is configured to determine aggregate quality indication information by determining the quality indication information associated with a highest preferred quality of the preferred qualities of the respective communication bearers and setting the aggregate quality indication information to the determined quality indication information.

3. A communication device as claimed in claim 1,
wherein the preferred quality is selected from a plurality of predetermined quality levels, the quality levels including a subset of quality levels associated with high priority, and
wherein the processing circuitry is configured to determine aggregate quality indication information by determining whether quality indication information for any one of the or each second communication devices indicates a preferred quality level belonging to the high priority subset, and then setting the aggregate quality indication information according to the determination of the preference for a high priority quality level.

4. A communication device as claimed in claim 3, wherein the processing circuitry is configured to set the aggregate quality indication information by:
obtaining data traffic information concerning data traffic in the relay bearer due to second communication devices having quality indication information that indicates a preferred quality level belonging to the high priority subset,
comparing the obtained information to reference information, and
where the comparison fulfils at least one criterion, setting the aggregate quality indication information to indicate a high priority quality level.

5. A communication device as claimed in claim 4, wherein, when the comparison does not fulfil the criterion or each of the criteria, setting the aggregate quality indication information to indicate a quality level not in the high priority subset.

6. A communication device as claimed in claim 5, wherein the quality level not in the high priority subset is the highest available quality level not in the high priority subset.

7. A communication device as claimed in any one of claims 4, 5 or 6,
wherein the obtained data traffic information includes a high priority throughput value, the high priority throughput value being a measure of the throughput of data in the relay bearer due to communication bearers for all second communication devices having quality indication information indicating a preferred quality level belonging to the high priority subset,
wherein the reference information includes a total throughput value for all data traffic in the relay bearer;
wherein comparing the obtained information to reference information includes determining the ratio of the high priority throughput value to the total throughput value; and
wherein the comparison is fulfilled when the ratio of high priority throughput value to total throughput value exceeds a predetermined value.

8. A communication device as claimed in any one of claims 4 to 7,
wherein the obtained data traffic information includes a count of the number of second communication devices having communication bearers with quality indication information that indicates a preferred quality level belonging to the high priority subset,
wherein the reference information includes a predetermined threshold number of communication bearers;
wherein comparing the obtained information to reference information includes comparing the counted number to the predetermined threshold number, and
wherein the comparison is fulfilled when the counted number exceeds the predetermined threshold number.

9. A communication device as claimed in any one of claims 4 to 8,
wherein the preferred quality is selected from a plurality of predetermined quality levels, the quality levels including a second subset of quality levels associated with high priority,
wherein the communication device provides the aggregator functionality via a base station entity within the cellular communication network,
wherein the processing circuitry is further configured: to obtain macrolayer data traffic information concerning data traffic in macrolayer bearers supported by the base station entity, the obtained macrolayer data traffic information including a high priority macrolayer throughput value, the high priority macrolayer throughput value being a measure of the throughput of data from the base station entity to the core network entity due to macrolayer bearers having quality indication information indicating a preferred quality level belonging to the second high priority subset; to compare the obtained high priority macrolayer throughput value to a reference macrolayer throughput value and to change a relay threshold value when the comparison fulfils a macrolayer criterion.

10. A communication device as claimed in any one of the preceding claims, wherein the processing circuitry is configured to request the change in the preferred quality of a relay bearer by transmitting a message to the core network entity requesting a change in the preferred quality of the relay bearer.

11. A communication device as claimed in claim 10, wherein the processing circuitry is configured to close the relay bearer and then to re-establish the relay bearer substantially immediately, the message being transmitted during re-establishment.

12. A communication device as claimed in claim 11, wherein relay bearer reestablishment is performed in MAC layer signalling or during a RRC connection reestablishment procedure.

13. A communication device as claimed in any one of claims 1 to 9, wherein the processing circuitry is configured to request the change in the preferred quality of a relay bearer by transmitting a second message to a controller entity coupled to the core network entity requesting a change in the preferred quality of the relay bearer.

14. A method for setting quality indication information for bearers established by first communication devices (104, 204, 500, 904, 1004, 1104) providing aggregator functionality to one or more second communication devices (110, 210, 910', 1010', 1110') in a cellular communication network, the method comprising:
obtaining, for the or each second communication device, quality indication information that indicates a preferred quality of a communication bearer between the second communication device and a core network entity of the cellular communication network, wherein the quality indication information is a Quality of service Class Identifier, QCI, value;
determining aggregate quality indication information based on the respective quality indication information; and
requesting a change in the preferred quality of a relay bearer between the first communication device and the core network entity in accordance with the determined aggregate quality indication information.

15. Computer software operable, when executed on a computing device, to cause one or more processors to perform a computer implemented method according to claim 14.

## Patentansprüche

1. Eine erste Kommunikationsvorrichtung (104, 204, 500, 904, 1004, 1104) zur Bereitstellung einer Aggregatorfunktionalität an eine oder mehrere zweite Kommunikationsvorrichtungen (110, 210, 910', 1010', 1110') in einem zellularen Kommunikationsnetz, wobei die erste Kommunikationsvorrichtung eine Verarbeitungsschaltung umfasst, so konfiguriert, dass:
für die oder jede zweite Kommunikationsvorrichtung Informationen zur Qualitätsangabe ermittelt werden, die eine bevorzugte Qualität eines Kommunikationsträgers zwischen der zweiten Kommunikationsvorrichtung und einer Kemnetzeinheit des zellularen Kommunikationsnetzes angeben, wobei es sich bei den Informationen zur Qualitätsangabe um einen Wert einer Dienstgüteklassenkennung (Quality of Service Class Identifier, QCI) handelt;
basierend auf den jeweiligen Informationen zur Qualitätsangabe Informationen zur Aggregierungsqualitätsangabe bestimmt werden; und
gemäß den bestimmten Informationen zur Aggregierungsqualitätsangabe eine Änderung der bevorzugten Qualität eines Relaisträgers zwischen der ersten Kommunikationsvorrichtung und der Kemnetzeinheit angefordert wird.

2. Eine Kommunikationsvorrichtung nach Anspruch 1, wobei die Verarbeitungsschaltung so konfiguriert ist, dass die Informationen zur Aggregierungsqualitätsangabe bestimmt werden, indem die Informationen zur Qualitätsangabe in Verbindung mit einer höchsten bevorzugten Qualität der bevorzugten Qualitäten der jeweiligen Kommunikationsträger bestimmt werden und die bestimmten Informationen zur Qualitätsangabe für die Informationen zur Aggregierungsqualitätsangabe festgelegt werden.

3. Eine Kommunikationsvorrichtung nach Anspruch 1,
wobei die bevorzugte Qualität aus einer Vielzahl zuvor bestimmter Qualitätsniveaus ausgewählt wird, wobei die Qualitätsniveaus einen Teilsatz von Qualitätsniveaus in Verbindung mit einer hohen Priorität beinhalten, und
wobei die Verarbeitungsschaltung so konfiguriert ist, dass die Informationen zur Aggregierungsqualitätsangabe bestimmt werden, indem bestimmt wird, ob die Informationen zur Qualitätsangabe der einen oder jeder zweiten Kommunikationsvorrichtung ein dem Teilsatz mit hoher Priorität angehörendes bevorzugtes Qualitätsniveau angeben und die Informationen zur Aggregierungsqualitätsangabe anschließend gemäß der Bestimmung der Bevorzugung eines Qualitätsniveaus mit einer hohen Priorität festgelegt werden.

4. Eine Kommunikationsvorrichtung nach Anspruch 3, wobei die Verarbeitungsschaltung so konfiguriert ist, dass die Informationen zur Aggregierungsqualitätsangabe durch Folgendes festgelegt werden:
Ermitteln von Datenverkehrsinformationen in Bezug auf Datenverkehr in dem Relaisträger, der dadurch bedingt ist, dass zweite Kommunikationsvorrichtungen Informationen zur Qualitätsangabe aufweisen, die ein dem Teilsatz mit hoher Priorität angehörendes bevorzugtes Qualitätsniveau angeben,
Vergleichen der ermittelten Informationen mit den Referenzinformationen und,
wenn der Vergleich zumindest ein Kriterium erfüllt, Festlegen der Informationen zur Aggregierungsqualitätsangabe, damit diese ein Qualitätsniveau mit hoher Priorität angeben.

5. Eine Kommunikationsvorrichtung nach Anspruch 4, wobei, wenn der Vergleich das Kriterium oder jedes der Kriterien nicht erfüllt, die Informationen zur Aggregierungsqualitätsangabe festgelegt werden, damit sie ein Qualitätsniveau angeben, das sich nicht in dem Teilsatz mit hoher Priorität befindet.

6. Eine Kommunikationsvorrichtung nach Anspruch 5, wobei es sich bei dem Qualitätsniveau, das sich nicht in dem Teilsatz mit hoher Priorität befindet, um das höchste verfügbare Qualitätsniveau handelt, das sich nicht in dem Teilsatz mit hoher Priorität befindet.

7. Eine Kommunikationsvorrichtung nach Anspruch 4, 5 oder 6,
wobei die ermittelten Datenverkehrsinformationen einen Durchsatzwert für hohe Priorität beinhalten, wobei der Durchsatzwert für hohe Priorität eine Messung des Durchsatzes von Daten in dem Relaisträger ist, der dadurch bedingt ist, dass Kommunikationsträger für alle zweiten Kommunikationsvorrichtungen Informationen zur Qualitätsangabe aufweisen, die ein dem Teilsatz mit hoher Priorität angehörendes bevorzugtes Qualitätsniveau angeben,
wobei die Referenzinformationen einen Durchsatzgesamtwert für sämtlichen Datenverkehr in dem Relaisträger beinhalten;
wobei das Vergleichen der ermittelten Informationen mit Referenzinformationen das Bestimmen des Verhältnisses zwischen dem Durchsatzwert für hohe Priorität und dem Durchsatzgesamtwert beinhaltet; und
wobei der Vergleich erfüllt ist, wenn das Verhältnis zwischen dem Durchsatzwert für hohe Priorität und dem Durchsatzgesamtwert einen zuvor bestimmten Wert überschreitet.

8. Eine Kommunikationsvorrichtung nach Anspruch 4 bis 7,
wobei die ermittelten Datenverkehrsinformationen eine Zählung der Anzahl an zweiten Kommunikationsvorrichtungen beinhalten, die Kommunikationsträger mit Informationen zur Qualitätsangabe aufweisen, welche ein dem Teilsatz mit hoher Priorität angehörendes bevorzugtes Qualitätsniveau angeben,
wobei die Referenzinformationen einen zuvor bestimmten Schwellenwert für die Anzahl an Kommunikationsträgem beinhalten;
wobei das Vergleichen der ermittelten Informationen mit den Referenzinformationen das Vergleichen der gezählten Anzahl mit dem zuvor bestimmten Schwellenwert für die Anzahl beinhaltet, und
wobei der Vergleich erfüllt ist, wenn die gezählte Anzahl den zuvor bestimmten Schwellenwert für die Anzahl überschreitet.

9. Eine Kommunikationsvorrichtung nach Anspruch 4 bis 8,
wobei die bevorzugte Qualität aus einer Vielzahl zuvor bestimmter Qualitätsniveaus ausgewählt wird, wobei die Qualitätsniveaus einen zweiten Teilsatz von Qualitätsniveaus in Verbindung mit einer hohen Priorität beinhalten,
wobei die Kommunikationsvorrichtung die Aggregatorfunktionalität über eine Basisstationseinheit innerhalb des zellularen Kommunikationsnetzes bereitstellt,
wobei die Verarbeitungsschaltung weiter so konfiguriert ist, dass: Makroschicht-Datenverkehrsinformationen in Bezug auf Datenverkehr in durch die Basisstationseinheit unterstützten Makroschichtenträgern ermittelt werden, wobei die ermittelten Makroschicht-Datenverkehrsinformationen einen Makroschicht-Durchsatzwert für hohe Priorität beinhalten, wobei der Makroschicht-Durchsatzwert für hohe Priorität eine Messung des Durchsatzes von Daten von der Basisstationseinheit an die Kemnetzeinheit ist, der dadurch bedingt ist, dass Makroschichtenträger Informationen zur Qualitätsangabe aufweisen, die ein dem Teilsatz mit hoher Priorität angehörendes bevorzugtes Qualitätsniveau angeben; der ermittelte Makroschicht-Durchsatzwert für hohe Priorität mit einem Makroschicht-Referenzdurchsatzwert verglichen wird und ein Relaisschwellenwert geändert wird, wenn der Vergleich ein Makroschicht-Kriterium erfüllt.

10. Eine Kommunikationsvorrichtung nach einem vorhergehenden Anspruch, wobei die Verarbeitungsschaltung so konfiguriert ist, dass die Änderung der bevorzugten Qualität eines Relaisträgers angefordert wird, indem eine Nachricht an die Kemnetzeinheit übermittelt wird, in der eine Änderung der bevorzugten Qualität des Relaisträgers angefordert wird.

11. Eine Kommunikationsvorrichtung nach Anspruch 10, wobei die Verarbeitungsschaltung so konfiguriert ist, dass der Relaisträger geschlossen wird und dass der Relaisträger anschließend umgehend im Wesentlichen wiederhergestellt wird, wobei die Nachricht während der Wiederherstellung übermittelt wird.

12. Eine Kommunikationsvorrichtung nach Anspruch 11, wobei die Wiederherstellung des Relaisträgers bei der MAC-Schichtsignalisierung oder während eines Vorgangs zur Wiederherstellung einer RRC-Verbindung durchgeführt wird.

13. Eine Kommunikationsvorrichtung nach einem der Ansprüche 1 bis 9, wobei die Verarbeitungsschaltung so konfiguriert ist, dass die Änderung der bevorzugten Qualität eines Relaisträgers angefordert wird, indem eine zweite Nachricht an eine an die Kernnetzeinheit gekoppelte Steuerungseinheit übermittelt wird, in der eine Änderung der bevorzugten Qualität des Relaisträgers angefordert wird.

14. Ein Verfahren zur Festlegung von Informationen zur Qualitätsangabe für Träger, eingerichtet durch erste Kommunikationsvorrichtungen (104, 204, 500, 904, 1004, 1104), die eine Aggregatorfunktionalität an eine oder mehrere zweite Kommunikationsvorrichtungen (110, 210, 910', 1010', 1110') in einem zellularen Kommunikationsnetz bereitstellen, wobei das Verfahren Folgendes umfasst:
Ermitteln, für die oder jede zweite Kommunikationsvorrichtung, von Informationen zur Qualitätsangabe, die eine bevorzugte Qualität eines Kommunikationsträgers zwischen der zweiten Kommunikationsvorrichtung und einer Kemnetzeinheit des zellularen Kommunikationsnetzes angeben, wobei es sich bei den Informationen zur Qualitätsangabe um einen Wert einer Dienstgüteklassenkennung (Quality of Service Class Identifier, QCI) handelt;
Bestimmen von Informationen zur Aggregierungsqualitätsangabe basierend auf den jeweiligen Informationen zur Qualitätsangabe; und
Anfordern einer Änderung der bevorzugten Qualität eines Relaisträgers zwischen der ersten Kommunikationsvorrichtung und der Kernnetzeinheit gemäß den bestimmten Informationen zur Aggregierungsqualitätsangabe.

15. Computersoftware, so betreibbar, dass sie bei Ausführung auf einer Computervorrichtung veranlasst, dass eine oder mehrere Verarbeitungseinheiten ein computerimplementiertes Verfahren nach Anspruch 14 durchführen.

## Revendications

1. Un premier dispositif de communication (104, 204, 500, 904, 1004, 1104) destiné à la fourniture d'une fonctionnalité d'agrégateur à un ou plusieurs deuxièmes dispositifs de communication (110, 210, 910', 1010', 1110') dans un réseau de communication cellulaire, le premier dispositif de communication comprenant des circuits de traitement configurés de façon à :
obtenir, pour le ou chaque deuxième dispositif de communication, des informations d'indication de qualité qui indiquent une qualité préférée d'une porteuse de communication entre le deuxième dispositif de communication et une entité de réseau noyau du réseau de communication cellulaire, où les informations d'indication de qualité sont une valeur d'identifiant de classe de qualité de service, QCI,
déterminer des informations d'indication de qualité agrégées en fonction des informations d'indication de qualité respectives, et
demander une modification de la qualité préférée d'une porteuse relais entre le premier dispositif de communication et l'entité de réseau noyau en fonction des informations d'indication de qualité agrégées déterminées.

2. Un dispositif de communication selon la Revendication 1, où les circuits de traitement sont configurés de façon à déterminer des informations d'indication de qualité agrégées par la détermination des informations d'indication de qualité associées à une qualité préférée la plus élevée des qualités préférées des porteuses de communication respectives et le réglage des informations d'indication de qualité agrégées sur les informations d'indication de qualité déterminées.

3. Un dispositif de communication selon la Revendication 1,
où la qualité préférée est sélectionnée parmi une pluralité de niveaux de qualité prédéterminés, les niveaux de qualité comprenant un sous-ensemble de niveaux de qualité associés à une priorité élevée, et
où les circuits de traitement sont configurés de façon à déterminer des informations d'indication de qualité agrégées par la détermination si des informations d'indication de qualité pour l'un quelconque des ou de chaque deuxièmes dispositifs de communication indiquent un niveau de qualité préféré appartenant au sous-ensemble de priorités élevées, et ensuite par le réglage des informations d'indication de qualité agrégées en fonction de la détermination de la préférence pour un niveau de qualité à priorité élevée.

4. Un dispositif de communication selon la Revendication 3, où les circuits de traitement sont configurés de façon à régler les informations d'indication de qualité agrégées par :
l'obtention d'informations de trafic de données concernant un trafic de données dans la porteuse relais dû à des deuxièmes dispositifs de communication possédant des informations d'indication de qualité qui indiquent un niveau de qualité préféré appartenant au sous-ensemble de priorités élevées,
la comparaison des informations obtenues à des informations de référence, et
si la comparaison satisfait au moins un critère, le réglage des informations d'indication de qualité agrégées de façon à indiquer un niveau de qualité à priorité élevée.

5. Un dispositif de communication selon la Revendication 4, où, lorsque la comparaison ne satisfait pas le critère ou chacun des critères, le réglage des informations d'indication de qualité agrégées de façon à indiquer un niveau de qualité ne se trouvant pas dans le sous-ensemble de priorités élevées.

6. Un dispositif de communication selon la Revendication 5, où le niveau de qualité ne se trouvant pas dans le sous-ensemble de priorités élevées est le niveau de qualité disponible le plus élevé ne se trouvant pas dans le sous-ensemble de priorités élevées.

7. Un dispositif de communication selon l'une quelconque des Revendications 4, 5 ou 6,
où les informations de trafic de données obtenues comprennent une valeur de débit à priorité élevée, la valeur de débit à priorité élevée étant une mesure du débit de données dans la porteuse relais dû à des porteuses de communication pour la totalité des deuxièmes dispositifs de communication possédant des informations d'indication de qualité indiquant un niveau de qualité préféré appartenant au sous-ensemble de priorités élevées,
où les informations de référence comprennent une valeur de débit totale pour la totalité du trafic de données dans la porteuse relais,
où la comparaison des informations obtenues à des informations de référence comprend la détermination du rapport de la valeur de débit à priorité élevée sur la valeur de débit totale, et
où la comparaison est satisfaite lorsque le rapport de la valeur de débit à priorité élevée sur la valeur de débit totale dépasse une valeur prédéterminée.

8. Un dispositif de communication selon l'une quelconque des Revendications 4 à 7,
où les informations de trafic de données obtenues comprennent un décompte du nombre de deuxièmes dispositifs de communication possédant des porteuses de communication avec des informations d'indication de qualité qui indiquent un niveau de qualité préféré appartenant au sous-ensemble de priorités élevées,
où les informations de référence comprennent un nombre seuil prédéterminé de porteuses de communication,
où la comparaison des informations obtenues à des informations de référence comprend la comparaison du nombre décompté au nombre seuil prédéterminé, et
où la comparaison est satisfaite lorsque le nombre décompté dépasse le nombre seuil prédéterminé.

9. Un dispositif de communication selon l'une quelconque des Revendications 4 à 8,
où la qualité préférée est sélectionnée parmi une pluralité de niveaux de qualité prédéterminés, les niveaux de qualité comprenant un deuxième sous-ensemble de niveaux de qualité associés à une priorité élevée,
où le dispositif de communication fournit la fonctionnalité d'agrégateur par l'intermédiaire d'une entité de station de base à l'intérieur du réseau de communication cellulaire,
où les circuits de traitement sont configurés en outre de façon à : obtenir des informations de trafic de données de macrocouche concernant un trafic de données dans des porteuses de macrocouche prises en charge par l'entité de station de base, les informations de trafic de données de macrocouche obtenues comprenant une valeur de débit de macrocouche à priorité élevée, la valeur de débit de macrocouche à priorité élevée étant une mesure du débit de données de l'entité de station de base vers l'entité de réseau noyau dû à des porteuses de macrocouche possédant des informations d'indication de qualité indiquant un niveau de qualité préféré appartenant au deuxième sous-ensemble de priorités élevées, comparer la valeur de débit de macrocouche à priorité élevée obtenue à une valeur de débit de macrocouche de référence et modifier une valeur seuil relais lorsque la comparaison satisfait un critère de macrocouche.

10. Un dispositif de communication selon l'une quelconque des Revendications précédentes, où les circuits de traitement sont configurés de façon à demander la modification de la qualité préférée d'une porteuse relais par la transmission d'un message à l'entité de réseau noyau demandant une modification de la qualité préférée de la porteuse relais.

11. Un dispositif de communication selon la Revendication 10, où les circuits de traitement sont configurés de façon à fermer la porteuse relais et à ensuite rétablir la porteuse relais sensiblement immédiatement, le message étant transmis au cours du rétablissement.

12. Un dispositif de communication selon la Revendication 11, où le rétablissement de porteuse relais est exécuté dans une signalisation de couche MAC ou au cours d'une procédure de rétablissement de connexion RRC.

13. Un dispositif de communication selon l'une quelconque des Revendications 1 à 9, où les circuits de traitement sont configurés de façon à demander la modification de la qualité préférée d'une porteuse relais par la transmission d'un deuxième message à une entité de dispositif de commande couplée à l'entité de réseau noyau demandant une modification dans la qualité préférée de la porteuse relais.

14. Un procédé de réglage d'informations d'indication de qualité pour des porteuses établies par des premiers dispositifs de communication (104, 204, 500, 904, 1004, 1104) fournissant une fonctionnalité d'agrégateur à un ou plusieurs deuxièmes dispositifs de communication (110, 210, 910', 1010', 1110') dans un réseau de communication cellulaire, le procédé comprenant :
l'obtention, pour le ou chaque deuxième dispositif de communication, d'informations d'indication de qualité qui indiquent une qualité préférée d'une porteuse de communication entre le deuxième dispositif de communication et une entité de réseau noyau du réseau de communication cellulaire, où les informations d'indication de qualité sont une valeur d'identifiant de classe de qualité de service, QCI,
la détermination d'informations d'indication de qualité agrégées en fonction des informations d'indication de qualité respectives, et
la demande d'une modification de la qualité préférée d'une porteuse relais entre le premier dispositif de communication et l'entité de réseau noyau en fonction des informations d'indication de qualité agrégées déterminées.

15. Un logiciel informatique conçu, lorsqu'il est exécuté sur un dispositif informatique, de façon à amener un ou plusieurs processeurs à exécuter un procédé mis en œuvre par ordinateur selon la Revendication 14.
